Europäisches Patentamt

European Patent Office

Office européen des brevets

(19)

(11) **EP 1 519 318 A1**

(12) **EUROPEAN PATENT APPLICATION**
published in accordance with Art. 158(3) EPC

(43) Date of publication:
**30.03.2005 Bulletin 2005/13**

(51) Int Cl.⁷: **G06T 15/00**

(21) Application number: **02736203.7**

(22) Date of filing: **28.06.2002**

(86) International application number:
**PCT/JP2002/006621**

(87) International publication number:
**WO 2004/003850 (08.01.2004 Gazette 2004/02)**

(84) Designated Contracting States:
**AT BE CH CY DE DK ES FI FR GB GR IE IT LI LU MC NL PT SE TR**

(71) Applicant: **FUJITSU LIMITED**
**Kawasaki-shi, Kanagawa 211-8588 (JP)**

(72) Inventor: **AMAKAI, Makoto, c/o FUJITSU LIMITED**
**Kawasaki-shi, Kanagawa 211-8588 (JP)**

(74) Representative: **Sunderland, James Harry**
**Haseltine Lake & Co.,**
**Imperial House,**
**15-19 Kingsway**
**London WC2B 6UD (GB)**

(54) **THREE&minus;DIMENSIONAL IMAGE COMPARING PROGRAM, THREE&minus;DIMENSIONALIMAGE COMPARING METHOD, AND THREE&minus;DIMENSIONAL IMAGE COMPARING DEVICE**

(57) Techniques are provided to compare three-dimensional (3D) images more quickly and accurately. A computer first produces a 3D differential image VB1 by comparing given 3D images B1 and B2, both having been converted into voxel form previously (step S1). The computer then produces a 3D fine differential image VB2 with respect to a surface of the 3D differential image VB1 (step S2), the 3D fine differential image VB2 provides details of the first and second 3D images B1 and B2 at a higher resolution than in the comparison that has been made at step S1. Subsequently, the computer determines a representation scheme for visualizing voxel differences, with reference to the 3D differential image VB1 and 3D fine differential image VB2 (step S3). Lastly, the computer displays voxel comparison results on a display screen or the like by drawing the 3D differential image VB1 and 3D fine differential image VB2 in the determined representation scheme (step S4).

FIG. 1

EP 1 519 318 A1

**Description**

Technical Field

The present invention relates to a three-dimensional (3D) image comparison program, method, and device for comparing 3D images and displaying differences therebetween. Particularly, the present invention relates to a 3D image comparison program, method, and device for comparing 3D images on a voxel-by-voxel basis at a high accuracy.

Background Art

Three-dimensional imaging techniques are used in many fields today to represent particular objects. Such 3D images include, for example, design images created with 3D computer aided design (CAD) tools prevalent in various manufacturing industries. In the medical field, for example, solid images of affected part can be captured with a 3D ultrasonic diagnostic system. Specifically the use of 3D images provides the following advantages:

- 3D CAD images will make it easy for design engineers to review their product design with a prototype, as well as for product inspectors to check manufactured products, with respect to the intended design image.
- Solid images captured with a 3D ultrasonic diagnostic system will aid doctors to visually identify an illness or deformation at an affected part of the patient's body.

Such usage of 3D images dictates the development of an automated system that can compare images more efficiently and accurately. Particularly, the manufacturing industries need high-speed, high-accuracy measurement and comparison techniques in pursuit of better product quality and shorter development times. Images to be compared are: a CAD design model composed of 3D free-form surfaces and a set of point data of a product or component manufactured using that model, the latter being obtained through measurement with a 3D geometry measurement device. Also compared is a cross section or surface that is formed from such measured point data.

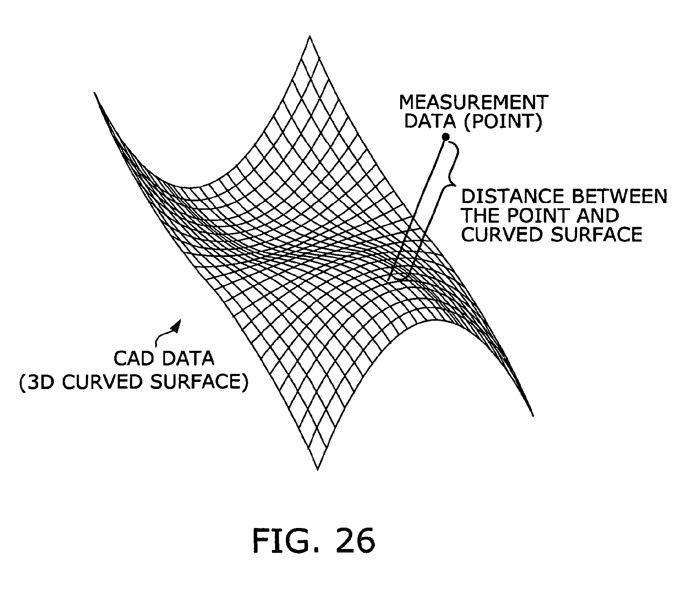

Conventional techniques for 3D image comparison evaluate differences between two surfaces in terms of the distance between each point on one surface and a corresponding point of the other surface. Such points are obtained through a measurement using a computed tomography (CT) scanner or a 3D digitizer, or alternatively, by subdividing a given surface into pieces with a certain algorithm. Surface-to-surface distance q at a particular point on one surface is the length of a perpendicular line drawn from that point to the other surface. Such distance data is plotted on a surface of interest, with color depths or intensities varied in proportion to the plotted values, or distances, for visualization of the data. A more specific explanation will be given below, with reference to FIG. 26.

FIG. 26 shows a 3D image of an object (CAD data of 3D curved surface) and a 3D point data set (measurement data).

The 3D surface image shown in FIG. 26 is given by the following equation:

$$z = y^3 + 3x^2 y \qquad (1)$$

For a given point $(x_0, y_0, z_0)$, its distance to the surface is defined to be the minimum value of $\{(x-x_0)^2+(y-y_0)^2+(z-z_0)^2\}^{1/2}$. This calculation is repeated extensively for all pieces of surface in the neighborhood of point $(x_0, y_0, z_0)$, and the smallest among the resulting values is extracted as the point-to-image distance.

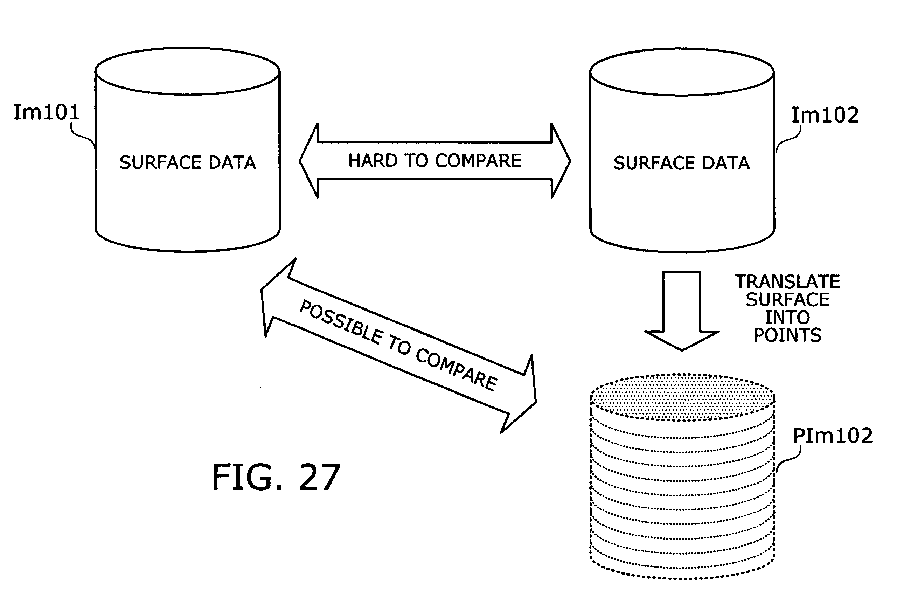

The above conventional comparison method will be discussed with reference to a conceptual view of FIG. 27.

FIG. 27 is a conceptual view of a conventional comparison method for 3D images.

Illustrated in FIG. 27 are two sets of surface data Im101 and Im102, the former being a design model and the other being a model built from photographs or the like. The conventional method is unable to compare those two sets of surface data directly. Therefore, according to the conventional method, the surface given by the surface data Im102 is first converted into a set of discrete points, and this point data set PIm102 is then compared with the surface data Im101.

The conventional method, however, needs to process a countless number of points to achieve high accuracy. Besides, CAD models in real-world product design are often made up of many small surfaces. The comparison process has thus to deal with lots of point-surface combinations, which leads to the following problems:

- enormous amounts of computation time
- possibility of obtaining incorrect results, because of difficulty in selecting a surface that is nearest to a given point

The following table (1) gives some typical numbers of measurement points required in the manufacturing industries. As can be seen, none of the existing methods are realistic because of too many measurement points.

| Type | Required Resolution | Component Size | Measurement points |
|---|---|---|---|
| Plastics Products | 0.01 [mm] | 400×400×20 [mm] | 10 billion points (component surfaces only) |
| Casting Products | 0.1 [mm] | 400×400×350 [mm] | 50 billion points (including those inside the component) |

In this table, plastics products are supposed to need five times as many measurement points as estimated from their surface area (400 mm × 400 mm).

Disclosure of the Invention

In view of the foregoing, it is an object of the present invention to provide a 3D image comparison program, 3D image comparison method, and 3D image comparison device for comparing 3D images more quickly and accurately.

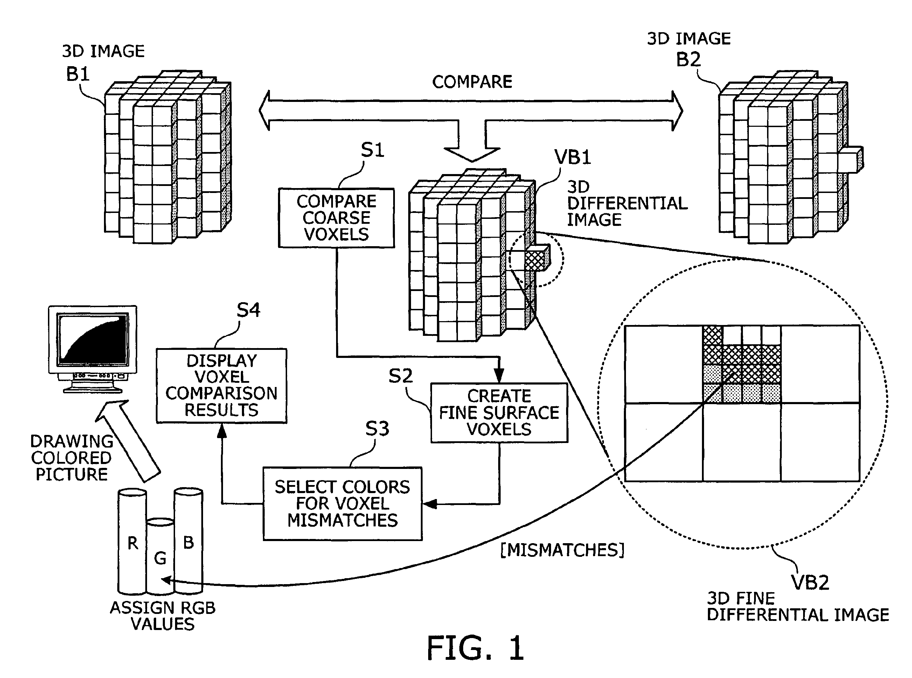

According to a first aspect of the present invention, there is provided a 3D image comparison program shown in FIG. 1, in order to solve the foregoing problems. To compare 3D images and display their differences, the 3D image comparison program of the present invention causes a computer to execute the steps described below.

Step S1 is to produce a 3D differential image by making a comparison between a first 3D image an a second 3D image, where both images have previously been converted into voxel form. With respect to a surface of the 3D differential image, step S2 is to produce a 3D fine differential image that provides details of the first and second 3D images at a higher resolution than in the comparison. Step S3 is to determine a representation scheme for visualizing a dissimilar part of the 3D differential image, through a detailed comparison between the first and second 3D images in the 3D fine differential image. Step S4 is to display voxel comparison results by drawing the 3D differential image in the determined representation scheme that is determined.

With the above 3D image comparison program, the computer produces a 3D differential image by comparing a first 3D image with a second 3D image, where both images have previously been converted into voxel form for the purpose of comparison. Then with respect to a surface of this 3D differential image, the computer produces a 3D fine differential image that provides details of the first and second 3D images at a higher resolution than in the comparison. The computer determines a representation scheme for visualizing voxel mismatches, with reference to the 3D differential image and 3D fine differential images. The computer now displays voxel comparison results by drawing the 3D differential image in the determined representation scheme.

According to a second aspect of the present invention, there is provided another 3D image comparison program designed to solve the foregoing problems. This program causes a computer to perform the following steps: producing a 3D differential image by comparing a first 3D image with a second 3D image which have previously been converted into voxel form; extracting a dissimilar part from the 3D differential image, counting voxel mismatches perpendicularly to each 3D geometric surface of a matched surface voxel, and based on the number of voxel mismatches, determining a representation scheme for visualizing voxel mismatches; and displaying the 3D differential image in the determined representation scheme.

With this 3D image comparison program, the computer produces a 3D differential image by comparing a first 3D image with a second 3D image, where both images have previously been converted into voxel form. Out of this 3D differential image, the computer extracts a dissimilar part and counts voxel mismatches perpendicularly to each 3D geometric surface of a matched surface voxel. The computer determines a representation scheme for visualizing voxel mismatches voxels, based on the count. The computer now displays the 3D differential image in the determined representation scheme.

According to a third aspect of the present invention, there is provided yet another 3D image comparison program designed to solve the foregoing problems. This program causes a computer to perform the following steps: producing a 3D differential image by comparing a first 3D image with a second 3D image which have previously been converted into voxel form; calculating a ratio of the number of surface voxels of a dissimilar part of the 3D differential image to the total number of voxels constituting the dissimilar part, and based on that ratio, determining a representation scheme for visualizing voxel mismatches on the 3D differential image; and displaying the dissimilar part of the 3D differential image in the representation scheme determined from the ratio.

With this 3D image comparison program, the computer produces a 3D differential image by comparing a first 3D image with a second 3D image, where both images have previously been converted into voxel form. The computer then calculates a ratio of the number of surface voxels of a dissimilar part of the 3D differential image to the total number of voxels constituting the dissimilar part, and based on that ratio, it determines a representation scheme for visualizing voxel mismatches on the 3D differential image. The computer displays the dissimilar part of the 3D differential image in the representation scheme determined from the ratio.

The above and other objects, features and advantages of the present invention will become apparent from the following description when taken in conjunction with the accompanying drawings which illustrate preferred embodiments of the present invention by way of example.

Brief Description of the Drawings

FIG. 1 is a conceptual view of a first embodiment of the invention.

FIG. 2 is a conceptual view of a 3D image comparison method according to the first embodiment.

FIG. 3 shows an example of a computer hardware structure that is suitable for execution of a 3D image comparison program.

FIG. 4 is a functional block diagram showing a functional structure of a 3D image comparison device.

FIG. 5 gives an overview of a comparison process of the 3D image comparison program.

FIG. 6 shows fine-voxel comparison of two 3D images, which is made after the initial comparison is completed.

FIG. 7 shows a color for common voxels, which is selected in a process of setting colors according to voxel mismatch count.

FIG. 8 shows a color for a voxel mismatch belonging to the reference image, which is selected in the process of setting colors according to voxel mismatch count.

FIG. 9 shows a color for a voxel mismatch belonging to the subject image, which is selected in the process of setting colors according to voxel mismatch count.

FIG. 10 shows the relationship between voxel element numbers and articulation point numbers.

FIG. 11 shows a typical data structure representing articulation points of a 3D image.

FIG. 12 shows a data structure of voxel representation using articulation points.

FIG. 13 is a flowchart showing the entire process flow of 3D image comparison.

FIG. 14 is a flowchart of a comparison data entry process as part of the 3D image comparison process of FIG. 13.

FIG. 15 is a flowchart of voxel processing as part of the 3D image comparison process of FIG. 13.

FIG. 16 is a flowchart of an image positioning process as part of the 3D image comparison process of FIG. 13.

FIG. 17 is a flowchart of a first image comparison process as part of the 3D image comparison process of FIG. 13.

FIG. 18 gives an overview of a comparison process performed with a 3D image comparison program according to a second embodiment.

FIG. 19 is a flowchart of a second image comparison process as part of the 3D image comparison process of FIG. 13.

FIG. 20 shows difference evaluation (1) performed as part of a comparison process of a 3D image comparison program according to a third embodiment of the invention.

FIG. 21 shows a color (light color) determined by the comparison process as part of the 3D image comparison program according to the third embodiment.

FIG. 22 shows difference evaluation (2) performed as part of the comparison process of the 3D image comparison program according to the third embodiment.

FIG. 23 shows a color (deep color) determined by the comparison process as part of the 3D image comparison program according to the third embodiment.

FIG. 24 shows difference evaluation (3) performed as part of the comparison process of the 3D image comparison program according to the third embodiment.

FIG. 25 is a flowchart of a third image comparison process as part of the 3D image comparison process of FIG. 13.

FIG. 26 shows a 3D image (CAD data: 3D curved surface) of an object and a 3D point data set (measurement data).

FIG. 27 is a conceptual view of a conventional 3D image comparison method.

Best Mode for Carrying Out the Invention

The present invention can be applied to geometrical comparison of 3D images such as:

- CAD data for producing a physical object
- computer graphics (CG) images, such as those seen in computer games
- measurement data of a physical object (e.g., industrial products, natural products, organisms and their organs)

Such a geometrical comparison is accomplished by translating two given 3D images into uniform cubes, or rectangular solids (called "voxels"), and then matching the two images with each other through voxel-by-voxel Boolean operations. For this comparison processing, the images have to be positioned properly with respect to their fiducial points, or particular geometrical features that both of them have. The degree of dissimilarity of images is expressed in terms of the number of voxel mismatches.

In the case a CAD-generated 3D surface model is given as a reference image for comparison, the results are visualized such that the information about voxel mismatches will be seen in some way on that 3D surface.

The comparison method outlined above can be implemented in the following three ways:

- 3D images are compared on an individual voxel basis, and their differences are visualized in a predetermined representation scheme. That is, differences of 3D images are visualized on a point-to-point basis (i.e., by different voxel colors).
- Voxel mismatches are counted in the perpendicular direction (x, y, or z direction) from each surface of a reference voxel, and resulting count values are visualized in a predetermined representation scheme on the corresponding surfaces of the reference voxel. That is, differences of 3D images are visualized as surface colors of a reference voxel (i.e., by color-coding the thickness of the corresponding dissimilar part).
- The difference between 3D images is visualized in a predetermined representation scheme based on the ratio of volume versus surface area of each dissimilar part. That is, differences of 3D images are visualized on the basis of a factor that characterizes each dissimilar part in its entirety (i.e., by color-coding the ratios)

This description covers a first embodiment of the invention, including a 3D image comparison program, method, and device that visualize differences between 3D images on a point-to-point basis (i.e., using different voxel colors). Covered next is a second embodiment of the invention, including a 3D image comparison program, method, and device that visualize differences between 3D images as surface colors of a reference voxel (i.e., by color-coding the thickness of the corresponding dissimilar part). Also covered is a third embodiment of the invention, including a 3D image comparison program, method, and device that visualize differences between 3D images on the basis of a factor that characterizes each dissimilar part in its entirety (i.e., by color-coding surface-to-volume ratios).

Preferred embodiments of the present invention will now be described below with reference to the accompanying drawings.

[First Embodiment]

This section explains a first embodiment of the invention, in which 3D images are compared on an individual voxel basis and their differences are visualized in a predetermined representation scheme.

FIG. 1 is a conceptual view of the first embodiment. Provided here is a 3D image comparison program according to the first embodiment which causes a computer to compare 3D images and visualize their differences. The computer accomplishes this task according to the steps described below. Briefly, the computer compares a 3D image B1 representing a design model in voxel form with another 3D image B2 representing measurement results in voxel form and displays their differences in a particular representation scheme.

First of all, the computer produces a 3D differential image VB1 by comparing the 3D images B1 and B2, both of which have previously been converted into voxel form (step S1).

With respect to a surface of the 3D differential image VB1, the computer produces a 3D fine differential image VB2 that provides details of the two 3D images B1 and B2 at a higher resolution than in the comparison that has been made at step S1 (step S2).

Subsequently, the computer determines a representation scheme for visualizing a dissimilar part of the 3D differential image VB1, through a detailed comparison between the 3D images B1 and B2 in the 3D fine differential image (step S3). Here the "representation scheme" is actually an additive mixture of red, green, and blue (RGB), or the three primary colors of light. As an alternative scheme, it may be a subtractive mixture of cyan, magenta, and yellow (CMY), which are known as complementary primary colors. This subtractive color mixture may include black as an additional element.

Lastly, the computer outputs voxel comparison results on a display screen or the like by drawing the 3D differential image VB1 in the determined representation scheme (step S4). The voxel comparison results may be output, not only on a display screen, but to a printer, plotter, or other devices.

As seen from the above, the first embodiment causes a computer to produce a 3D differential image VB1 by comparing voxel-converted 3D images B1 and B2.

With respect to a surface of the 3D differential image VB1, the computer produces a 3D fine differential image VB2 that provides details of the two 3D images B1 and B2 at a higher resolution than in the comparison that has been made at step S1.

Subsequently, the computer determines a representation scheme for visualizing a dissimilar part of the 3D differential image VB1, through a detailed comparison between the 3D images B1 and B2 in the 3D fine differential image.

The computer then outputs voxel comparison results on a display screen or the like by drawing the 3D differential image VB1 in the determined representation scheme.

In this way the present invention makes it possible to compare given 3D images more quickly and accurately.

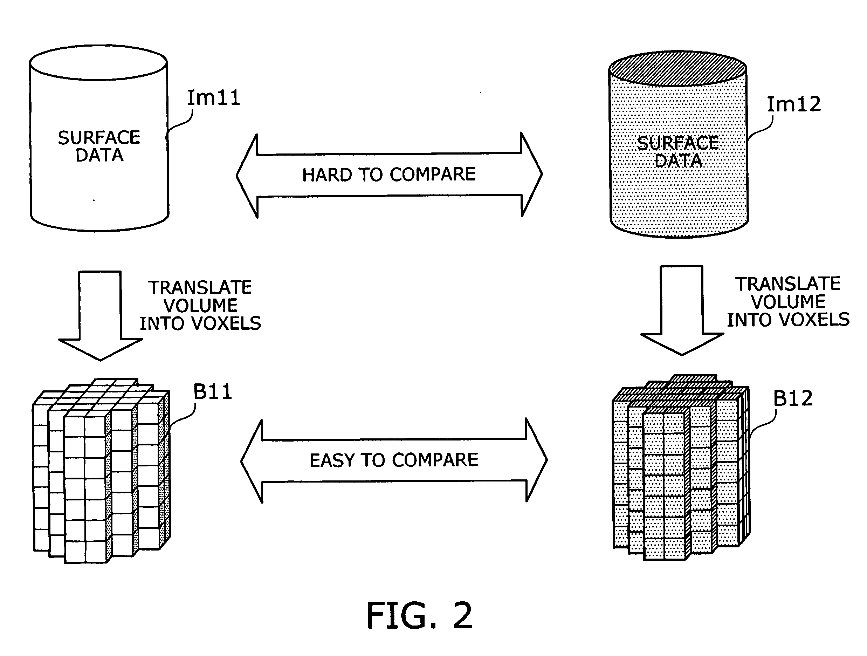

Referring next to FIG. 2, the concept of a 3d image comparison method according to the first embodiment will be described below.

FIG. 2 is a conceptual view of a 3D image comparison method according to the first embodiment.

Shown in FIG. 2 are surface data Im11 representing a design model and another instance of surface data Im12. Since those two sets of surface data cannot be compared directly, the 3D image comparison method of the first embodiment begins the process with converting a volume defined by the surface data Im11 into a chunk of voxels B11, as well as that of the other surface data Im12 into another chunk of voxels B12. The method then compares those two chunks of voxels B11 and B12, thereby overcoming the difficulty of comparing two 3D images.

The following will give more specifics about the first embodiment of the present invention.

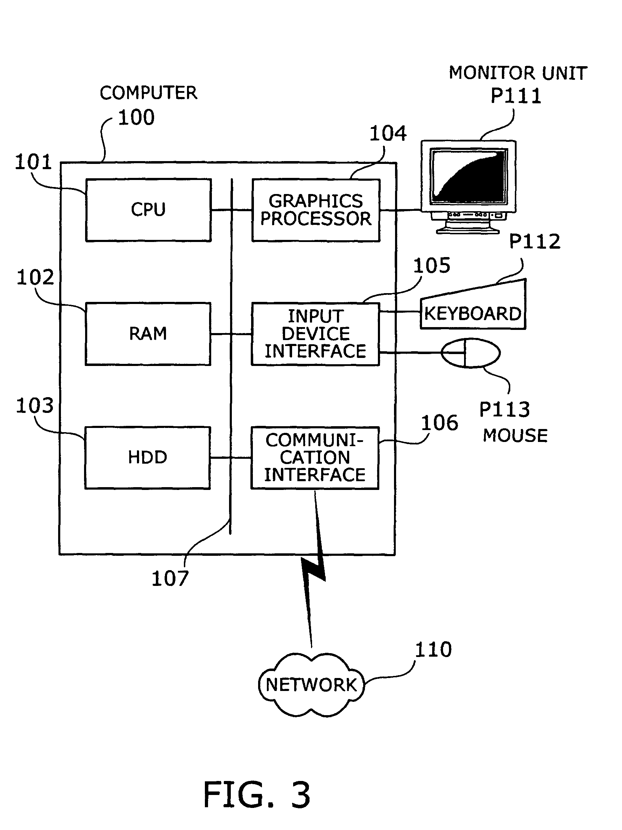

FIG. 3 shows an example of a computer hardware structure that is suitable for execution of a 3D image comparison program. The illustrated computer 100 has a central processing unit (CPU) 101 to control the entire system, interacting with the following components via a bus 107: a random access memory (RAM) 102, a hard disk drive (HDD) 103, a graphics processor 104, an input device interface 105, and a communication interface 106.

The RAM 102 temporarily stores the whole or part of operating system (OS) programs and application programs that the CPU 101 executes, as well as other various data objects manipulated by the CPU 101 at runtime. The HDD 103 stores program and data files of the operating system and various applications including a 3D image comparison program.

The graphics processor 104 is coupled to a monitor unit P111. The graphics processor 104 produces images in accordance with commands from the CPU 101 and displays them on the screen of the monitor unit P111. The input device interface 105 is coupled to a keyboard P112 and a mouse P113. The input signals from the keyboard P112 and mouse P113 are supplied to the CPU 101 via the bus 107.

The communication interface 106 is linked to a network 110. The communication interface 106 exchanges data with other computers via the network 110.

The computer 100 with the above-described hardware configuration will function as a 3D image comparison device when a 3D image comparison program is running thereon. The following will now explain what processing functions the computer, as a 3D image comparison device, is supposed to provide.

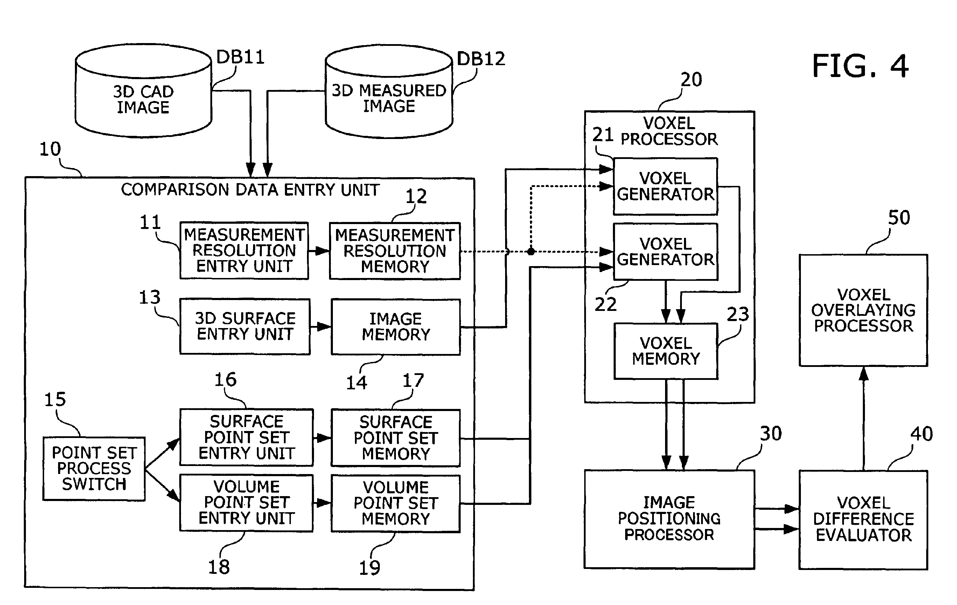

FIG. 4 is a functional block diagram showing a functional structure of a 3D image comparison device.

As seen from FIG. 4, the 3D image comparison device of the present invention has the following elements: a comparison data entry unit 10 for entering comparison data; a voxel processor 20 for producing voxels from given 3d images; an image positioning processor 30 for positioning voxel-converted 3D images; a voxel difference evaluator 40 for evaluating and displaying voxel mismatches; and a voxel overlaying processor 50 for overlaying those voxels for display. The comparison data entry unit 10 has, among others, the following functional elements: a measurement resolution entry unit 11, a measurement resolution memory 12, a 3D surface entry unit 13, an image memory 14, a point set process switch 15, a surface point set entry unit 16, a surface point set memory 17, a volume point set entry unit 18, and a volume point set memory 19. The voxel processor 20 has, among others, a voxel generator 21, a voxel generator 22, and a voxel memory 23. Those functional elements will now be described below in detail, in the order that they have been mentioned above.

The comparison data entry unit 10 is coupled to the voxel processor 20, 3D CAD image DB11, and 3D measured image DB12. The comparison data entry unit 10 provides CAD data and measurement data for 3D image comparison. When a command for 3D image data entry is received from a user, the comparison data entry unit 10 identifies the image type of each specified 3D image. The comparison data entry unit 10 then checks whether 3D images have been entered to the image memory 14, surface point set memory 17, or volume point set memory 19.

The measurement resolution entry unit 11, coupled to the measurement resolution memory 12, receives a measurement resolution parameter from the user. This measurement resolution parameter gives a minimum size of voxels into which 3D images are to be divided. The user can specify a desired size for this purpose. Preferably, the measurement resolution parameter is as fine as the precision required in manufacturing the product of interest, which is, for example, 0.01 mm.

The measurement resolution memory 12, coupled to the measurement resolution entry unit 11, stores the measurement resolution that the measurement resolution entry unit 11 has received.

The 3D surface entry unit 13 is coupled to the image memory 14 and 3D CAD image DB11. If the image type of a user-specified 3D image is "3D surface," the 3D surface entry unit 13 is activated to receive 3D surface data from the 3D CAD image DB11.

The image memory 14, coupled to the 3D surface entry unit 13, stores given 3D surface data in an internal storage device when that data is accepted at the 3D surface entry unit 13.

The point set process switch 15, coupled to surface point set entry unit 16 and volume point set entry unit 18, selects appropriate functions to process a given point set data. The image type of a user-specified 3D image may be either "surface measurement data" or "section measurement data." The point set process switch 15 activates either the surface point set entry unit 16 or volume point set entry unit 18, depending on which image type is specified.

The surface point set entry unit 16 is coupled to the point set process switch 15, surface point set memory 17, and 3D measured image DB12. The surface point set entry unit 16 handles entry of surface measurement data. More specifically, if the image type of a user-specified 3D image is "surface measurement data," the surface point set entry unit 16 is activated to receive surface measurement data from the 3D measured image DB12.

The surface point set memory 17, coupled to the surface point set entry unit 16, stores given surface measurement data in an internal storage device. Specifically, the surface point set memory 17 stores 3D surface data in its internal storage device when that data is received at the surface point set entry unit 16.

The volume point set entry unit 18 is coupled to the point set process switch 15, volume point set memory 19, and 3D measured image DB12. The volume point set entry unit 18 handles entry of section measurement data. More specifically, if the image type of a user-specified 3D image is "section measurement data," the volume point set entry unit 18 is activated to receive section measurement data from the 3D measured image DB12.

The volume point set memory 19, coupled to the volume point set entry unit 18, stores given section measurement data. More specifically, the volume point set memory 19 stores section measurement data in its internal storage device when that data is received at the volume point set entry unit 18.

The voxel processor 20 is coupled to the comparison data entry unit 10 and image positioning processor 30. The voxel processor 20 produces an image in voxel form from the 3D image supplied from the comparison data entry unit 10. Specifically, the voxel processor 20 selects comparison data recorded in the comparison data entry unit 10. Also, the voxel processor 20 determines the voxel size from the measurement resolution parameter recorded in the comparison data entry unit 10. Then, with reference to the image type of each 3D image stored in the comparison data entry unit 10, the voxel processor 20 determines what to do at the next step.

More specifically, in the case the image type indicates that the image in question is a 3D surface, the voxel processor 20 retrieves relevant 3D surface data out of the image memory 14 in the comparison data entry unit 10 for delivery to the voxel generator 21.

In the case the image type indicates that the image in question is surface measurement data, the voxel processor 20 retrieves relevant surface measurement data out of the surface point set memory 17 in the comparison data entry unit 10 for delivery to the voxel generator 22.

Further, in the case the image type indicates that the image in question is section measurement data, the voxel processor 20 retrieves relevant section measurement data out of the volume point set memory 19 in the comparison data entry unit 10 for delivery to the voxel generator 22.

The voxel processor 20 then checks whether the voxel generator 21 and 22 have produced voxels.

The voxel generator 21 creates an image in voxel form, based on the given 3D surface.

The voxel generator 22 creates an image in voxel form, based on given surface measurement data. Or, alternatively, the voxel generator 22 creates an image in voxel form, based on given section measurement data.

The image positioning processor 30 is coupled to the voxel processor 20 and voxel difference evaluator 40. The image positioning processor 30 aligns two images converted into voxel form by the voxel processor 20. More specifically, two 3D images (i.e., one is CAD data representing a 3D surface, and the other is surface measurement data or section measurement data obtained through measurement) have a set of fiducial points that are previously specified in each of them. The image positioning processor 30 selects those fiducial points and calculates the offset of each image from the selected fiducial points. The image positioning processor 30 moves voxel-converted 3D surfaces, based on the calculated offsets, and then it stores the moved 3D surfaces in its internal storage device.

The voxel difference evaluator 40 is coupled to the image positioning processor 30 and voxel overlaying processor 50. The voxel difference evaluator 40 compares and evaluates two images properly positioned by the image positioning processor 30 and displays the results by visualizing the two images in a particular representation scheme. The term "particular representation scheme" refers herein to a technique of representing image differences by using, for example, RGB colors with different depths. More specifically, the voxel difference evaluator 40 selects a surface voxel. This selection triggers the voxel difference evaluator 40 to determine whether the selected voxel is a surface voxel or not. If this test reveals that a surface voxel is currently selected, then the voxel difference evaluator 40 applies an additional voxel conversion to that part at a specified test resolution. That is, the selected surface voxel is subdivided into smaller voxels according to a test resolution, which may be previously specified by the user. The test resolution may initially be set to several times as coarse as the measurement resolution, and later be varied stepwise to evaluate images at a finer resolution.

The voxel difference evaluator 40 makes a comparison between the voxel-converted 3D surface and surface/section measurement data and counts their voxel mismatches. The details of this comparison process will be discussed later.

Based on the number of voxel mismatches, the voxel difference evaluator 40 then determines a color depth as a representation scheme to be used, so that the voxel of interest will be colored.

Subsequently, the voxel difference evaluator 40 determines whether all voxels are colored. This means that the voxel difference evaluator 40 determines whether the comparison of voxel-converted 3D images is completed.

The voxel overlaying processor 50, coupled to the voxel difference evaluator 40, aligns and combines a plurality of images visualized by the voxel difference evaluator 40.

The 3D CAD image DB11, coupled to the comparison data entry unit 10, stores CAD data representing a 3D surface.

The 3D measured image DB12, coupled to the comparison data entry unit 10, stores measurement data including surface measurement data and section measurement data.

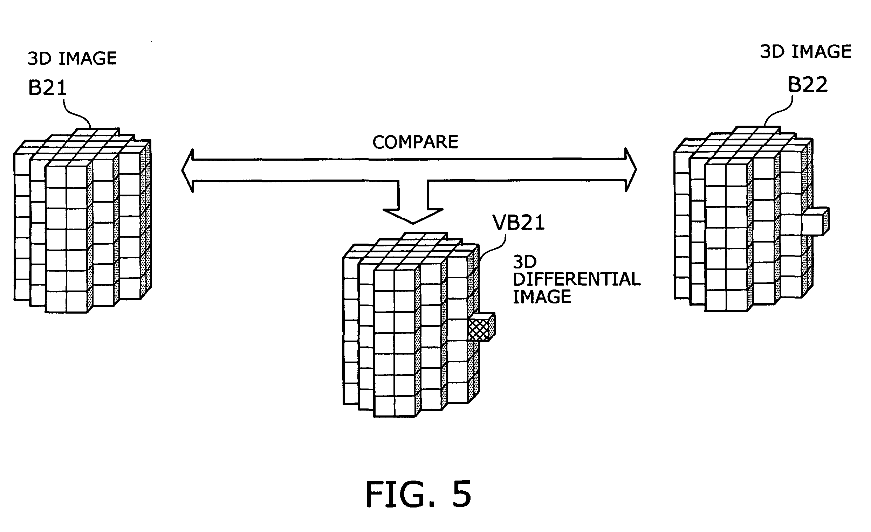

Referring next to FIGS. 5 to 9, the following will provide more specifics about the comparison process implemented in a 3D image comparison program according to the first embodiment of the invention.

The first embodiment reduces computation time by comparing 3D shapes in the voxel domain. Think of, for example, a CAD image of an object having 3D curved surfaces. The image space is divided into uniform, minute cubes, or voxels, and a 3D image of the object of interest is created by setting every voxel belonging to that object to ON state and every other outer voxel to OFF state. In the case the source image data is given as an output of an X-ray CT scanner, voxels are set to ON state if they have high x-ray densities, while the others are set to OFF state. The following will provide a brief explanation of how voxels are compared.

FIG. 5 gives an overview of a comparison process of the 3D image comparison program.

The comparison process converts two given images into voxel form, like 3D images B21 and B22 shown in FIG. 5, and applies Boolean operations to their corresponding portions to visualize their differences as a 3D differential image VB21. This method reduces computational load by a factor of several tens, compared to conventional methods. Boolean operations include an exclusive-OR (XOR) operation between voxels of 3D images B21 and B22, which extracts voxel mismatches.

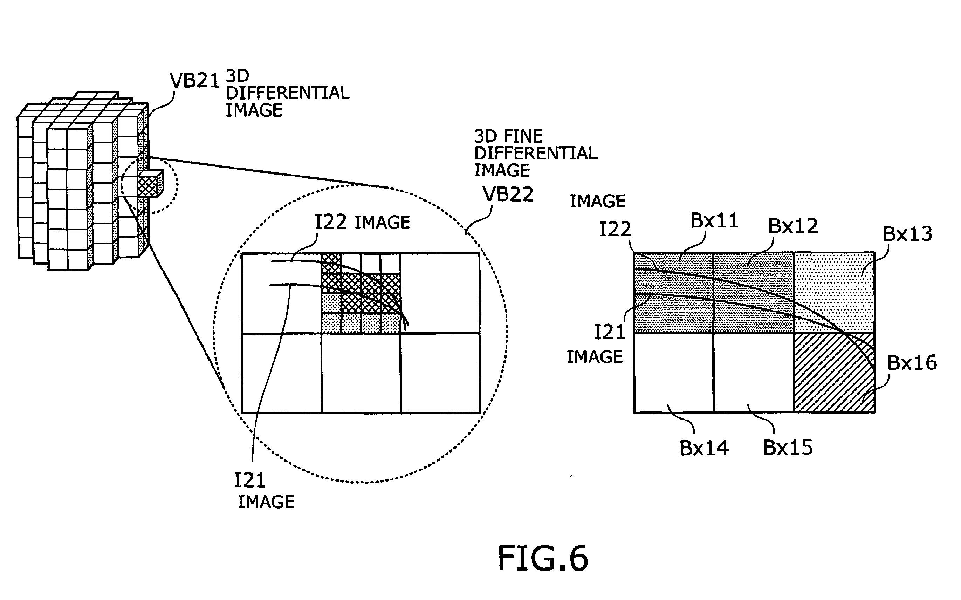

The initial voxel resolution of 3D images is relatively coarse compared to test resolution. The comparison process then produces fine voxels for each coarse voxel in order to find and evaluate differences between the images in terms of the number of voxel mismatches. This difference information in numerical form is then put on one of the two images in visual form, so that the user can recognize it visually. The following will describe the mechanism for this feature, with reference to FIG. 6.

FIG. 6 shows a fine-voxel comparison of two 3D images, which is made after an initial comparison is finished.

The process assumes that a 3D differential image VB21 has been produced in coarse voxel form as shown in FIG. 6. Voxel on the surface of this 3D differential image VB21 are subdivided into fine voxels (3D fine differential image VB22), so that the difference between two images can be evaluated in terms of the number of voxel mismatches observed therein. In the example of FIG. 6, the 3D fine differential image VB22 of one coarse voxel contains eight fine voxels that are different between two source images I21 and I22.

The process now proceeds to the step of determining voxel color depths based on the number of mismatches, so that the entire difference can be identified visually. As shown in the example of FIG. 6, voxels Bx11, Bx12, and Bx13 are given particular colors (e.g., several blues with different depths), indicating that the voxel mismatches belong to the image I22. Another voxel Bx16 is given another particular color (e.g., red with a certain depth), indicating that this mismatch belongs to the image I21. The other voxels Bx14 and Bx15 have no colors assigned, meaning that no mismatches are found at that portion.

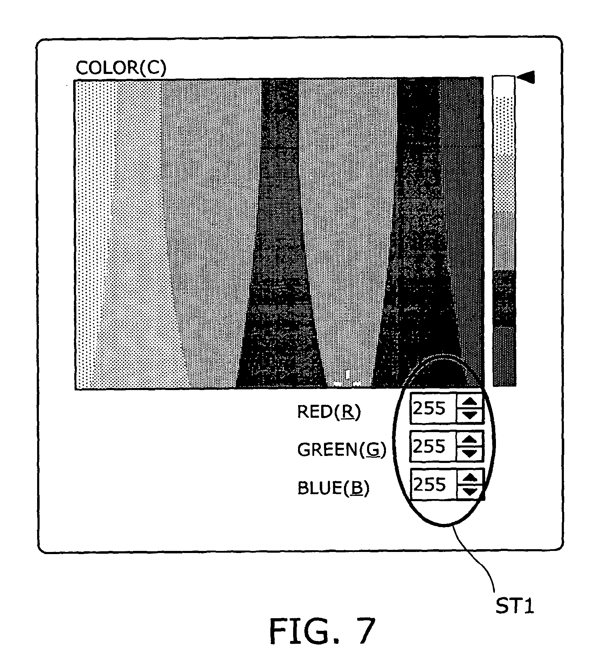

Voxels are subdivided in the proportion of one coarse voxel to four fine voxels in the example of FIG. 6. This means that the magnitude of three-dimensional mismatch in a coarse voxel can take a value of 64 ($4\times4\times4$) at maximum. Referring next to FIGS. 7 to 9, the following will describe how a color is determined when a mismatch count is given.

FIG. 7 shows a color for common voxels, which is selected in a process of setting colors according to voxel mismatch count.

The control boxes in area ST1 indicates that maximum intensities (e.g., 255, 255, 255) are given to three colors RGB to represent common voxels (i.e., voxels with no mismatch).

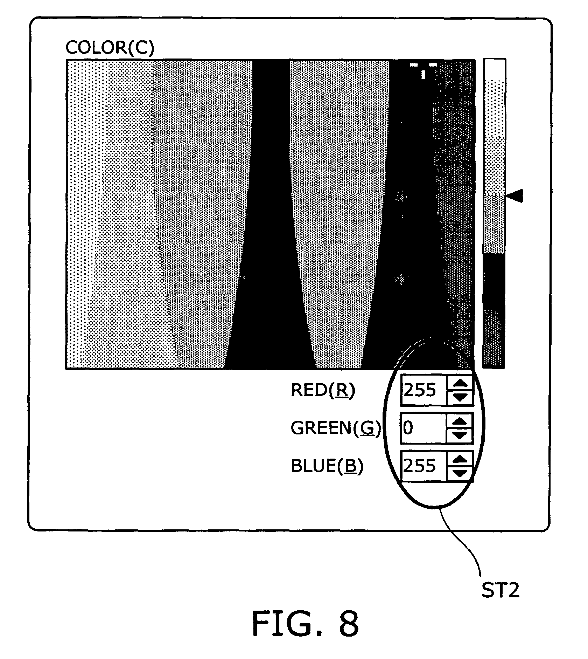

FIG. 8 shows a color for a voxel mismatch belonging to the reference image, which is selected in the process of setting colors according to voxel mismatch count.

In the example of FIG. 8, the central control box in area ST2 indicates that the intensity of green (G) is decreased in accordance with the number of voxel mismatches. The colors determined in this way are used to color-coding voxels at which the reference image lies inside the subject image.

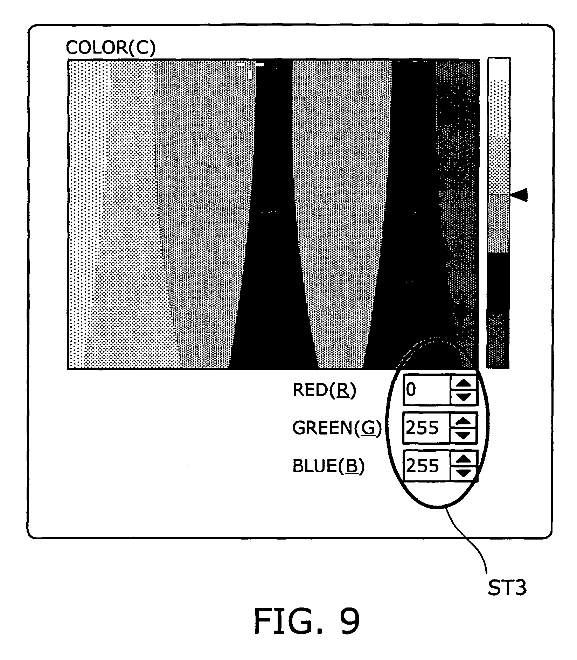

FIG. 9 shows a color for a voxel mismatch belonging to the subject image, which is selected in the process of setting colors according to voxel mismatch count.

In the example of FIG. 9, the topmost control box in area ST3 indicates that the intensity of red (R) is decreased in accordance with the number of voxel mismatches, as shown in FIG. 9. The colors determined in this way are used to color-coding voxels at which the subject image lies inside the reference image.

As has been described in FIGS. 7 to 9, the color values are determined in proportion to the number of voxels of each image.

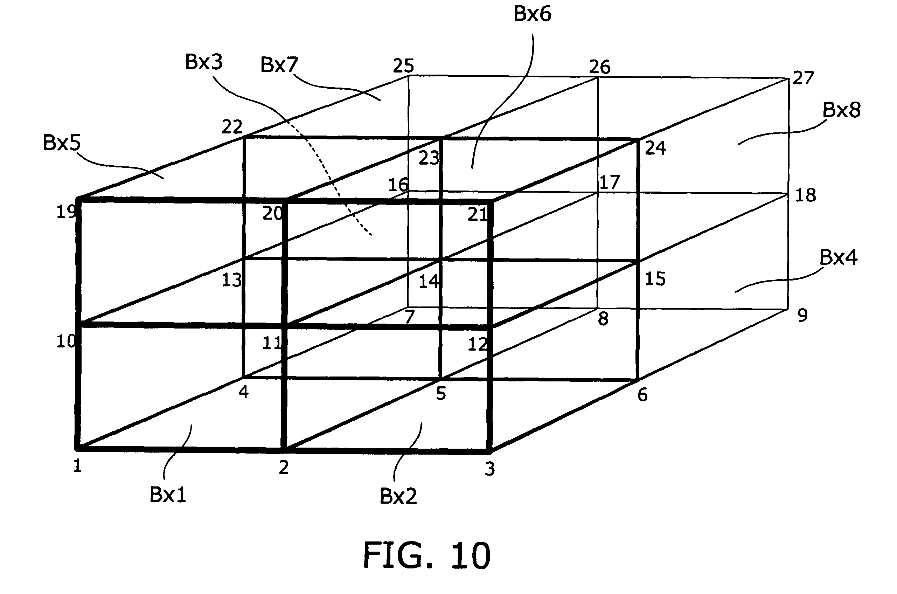

Referring next to FIGS. 10 to 12, the structure of data used in the 3D image comparison device will be described below.

FIG. 10 shows the relationship between voxel element numbers and articulation point numbers.

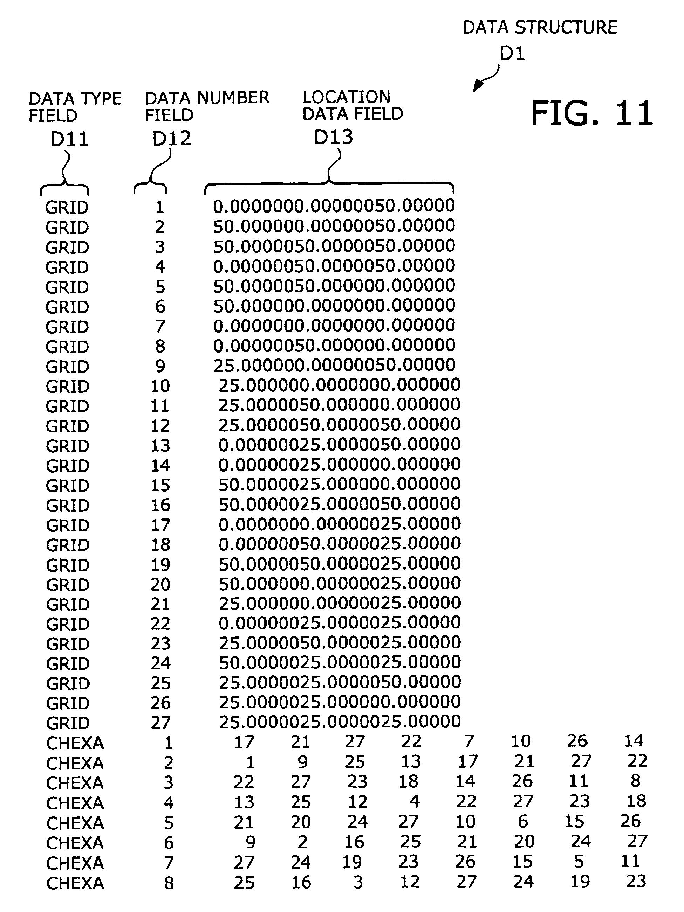

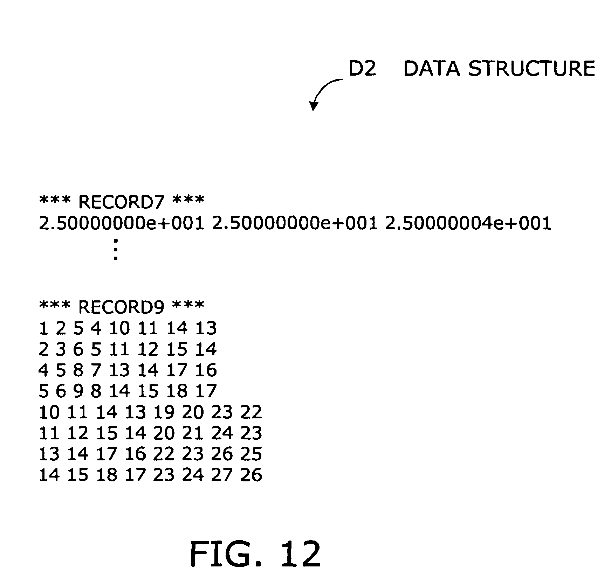

FIG. 10 assumes that a 3D image is converted to eight voxels Bx1 to Bx8. Voxel Bx1 is defined as a set of articulation points (1, 2, 5, 4, 10 11, 14, 13), where the points is ordered counterclockwise for each of the bottom and top planes. The voxel data structure contains coordinate data for each of such articulation points. Referring now to FIGS. 11 and 12, the following will describe this coordinate data in detail.

FIG. 11 shows a typical data structure representing articulation points of a 3D image, which is, more particularly, a typical data structure used in a finite element analysis.

Voxel data structure D1 of FIG. 11 is formed from a data type field D11 representing classification of data, a data number field D12 giving serial numbers in each data type, and a location data field D13 providing location data for each data type.

The data type field D11 contains symbols such as "GRID" and "CHEXA" as shown in FIG. 11. "GRID" refers to articulation points, and "CHEXA" refers to segments constituting a 3D image.

The data number field D12 contains serial numbers. For example, GRID entries are serially numbered, from "1" to "27," as FIG. 11 shows. These serial numbers correspond to what have been mentioned in FIG. 10 as articulation point numbers. The data number field D12 also contains serial numbers "1" to "8" for CHEXA entries shown in FIG. 11. These serial numbers "1" to "8" are what have been mentioned in FIG. 10 as voxel element numbers.

The location data field D13 contains the coordinates of each articulation point, such as "0.000000, 0.000000, 50.00000" for the GRID entry numbered "1," as shown in FIG. 11. Each data number (referred to as "articulation point ID" for GRID entries) is followed by coordinates (x, y, z) in floating-point notation. Other entries of the same data type follows as shown in FIG. 11. What is more, the location data field D13 contains articulation point IDs of each CHEXA entry, such as "17, 21, 27, 22, 7, 10, 26, 14" for the entry numbered "1." That is, each CHEXA entry is defined as a data number (referred to as "element ID") accompanied by such a series of articulation point IDs. FIG. 11 also shows other similar entries.

FIG. 12 shows a data structure of voxels using articulation points, which enables a 3D image space to be represented in the voxel domain.

As seen from FIG. 12, the data structure D2 defines voxels in two separate records that are previously defined, one containing element sizes and the other containing articulation points of each element. Element sizes are represented by the lengths of x, y, and z edges in floating-point form. Each element is defined as a series of articulation points. The illustrated data structure, however, has no particular record for element IDs because those element definitions are arranged in an orderly sequence. In the example of FIG. 12, RECORD7 defines the element size as "2.50000000e+001, 2.50000000e+001, 2.50000004e+001" in the scientific notation (floating-point notation). Also, RECORD9 contains articulation points "1, 2, 5, 4, 10, 11, 14, 13" to "14 15, 18, 17, 23, 24, 27, 26" to define multiple elements. In the notation of element sizes, the symbol e represents the base of an exponential function. In the above example, e is 10, as in e+001=10.

3D images are compared with a 3D image comparison device with the above-described structure. The following will explain in detail what the 3D image comparison process actually performs.

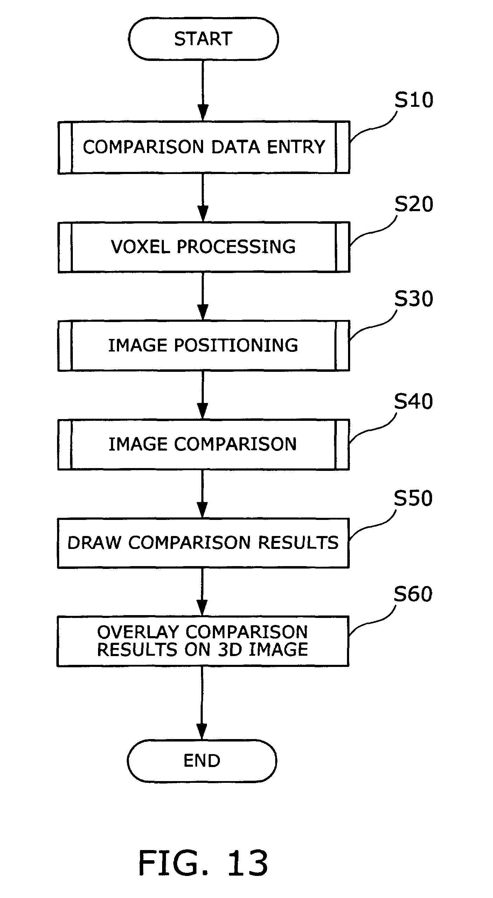

FIG. 13 is a flowchart showing the entire process flow of 3D image comparison. This process is executed by the CPU 101 upon power-up of the 3D image comparison device, upon activation of a relevant program, or in response to other predetermined events. The following will describe the flowchart of FIG. 13 in the order of step numbers, with reference to the functions explained earlier in FIG. 4.

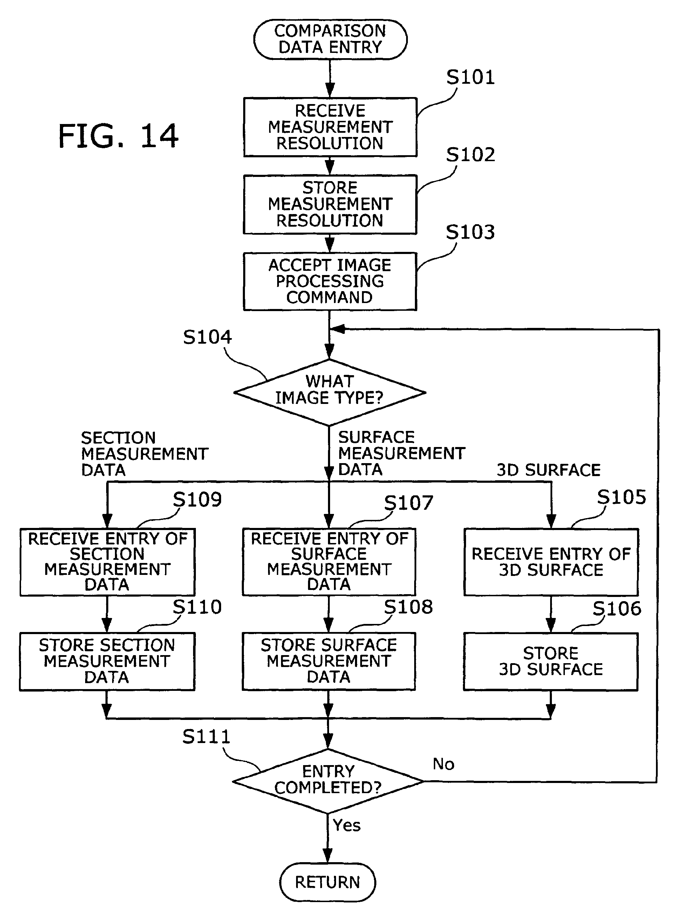

[Step S10] The comparison data entry unit 10 performs a comparison data entry process to input CAD data and measurement data, which are 3D images to be compared. Details of this comparison data entry process will be described later with reference to FIG. 14.

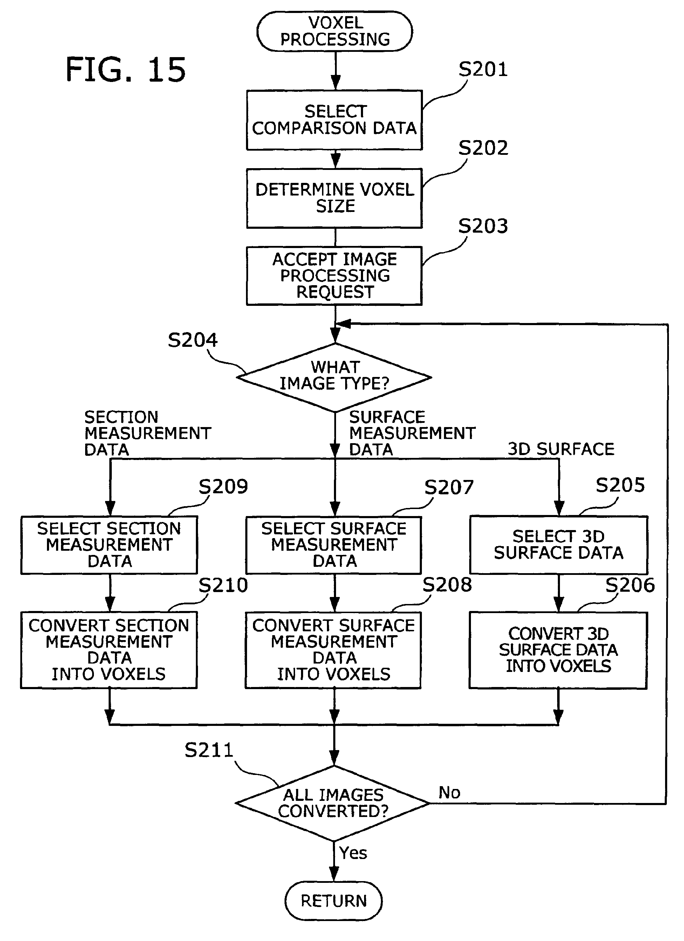

[Step S20] The voxel processor 20 performs voxel processing on the 3D images given at step S10 to generate images in voxel form. Details of this voxel processing will be described later with reference to FIG. 15.

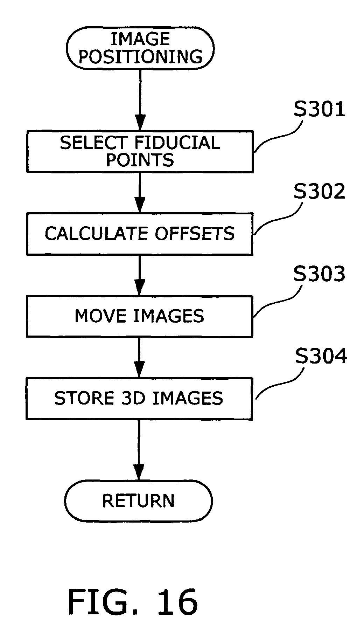

[Step S30] With the two images converted into voxel form at step S20, the image positioning processor 30 performs an image positioning process to align the two images properly. Details of this image positioning process will be described later with reference to FIG. 16.

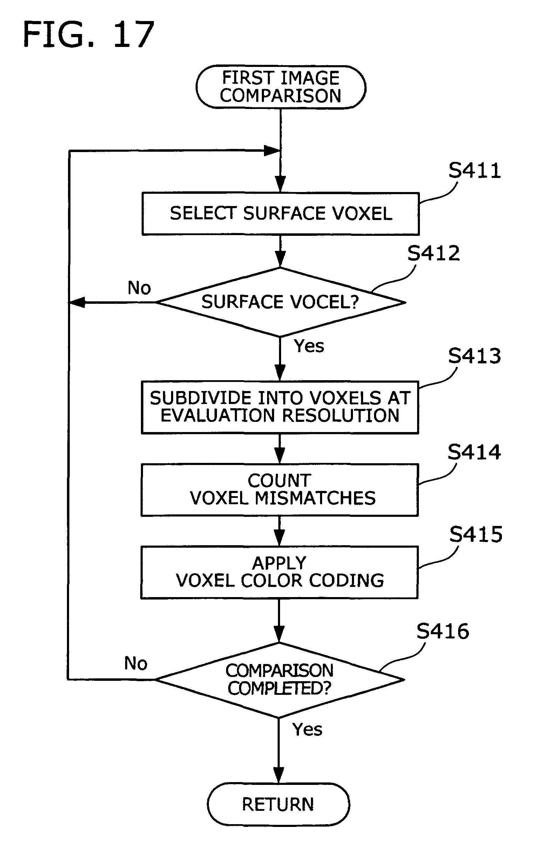

[Step S40] The voxel difference evaluator 40 executes an image comparison process to compare and evaluate the two images that has been aligned properly at step S30. Details of this image comparison process will be described later with reference to FIG. 17.

[Step S50] The voxel difference evaluator 40 draws, in a particular representation scheme, a plurality of images produced at the comparison and evaluation step S40. The term "particular representation scheme" refers herein to a technique of representing image differences by using, for example, RGB colors with different depths.

[Step S60] The voxel overlaying processor 50 aligns and combines the plurality of images shown at step S50, thereby overlaying comparison results on a specified 3D image. More specifically, a 3D differential image is obtained from a comparison between two voxel-converted images, with exclusive-OR operations to selectively visualize a mismatched portion of them. In this case, the voxel overlaying processor 50 can display the original images and their mismatched portions distinguishably by using different colors. This is accomplished through superimposition of the two voxel-converted images, 3D differential image, and/or 3D fine differential image.

FIG. 14 is a flowchart of a comparison data entry process as part of the 3D image comparison process of FIG. 13. Step S10 (comparison data entry process) of FIG. 13 calls up the following sequence of steps. This comparison data entry process is performed by the comparison data entry unit 10 of the 3D image comparison device.

[Step S101] The measurement resolution entry unit 11 in the comparison data entry unit 10 receives input of measurement resolution from the user.

[Step S102] The measurement resolution memory 12 in the comparison data entry unit 10 stores the measurement resolution parameter received at step S101.

[Step S103] The comparison data entry unit 10 receives a 3D image entry command from the user.

[Step S104] The comparison data entry unit 10 determines of what image type the 3D image specified at step S103 is. The comparison data entry unit 10 then proceeds to step S105 if the image type is "3D surface," or to step S107 if it is "surface measurement data," or to S109 if it is "section measurement data." In the case the image type is either "surface measurement data" or "section measurement data," the point set process switch 15 in the comparison data entry unit 10 activates a surface point set entry unit 16 or volume point set entry unit 18, accordingly.

[Step S105] Since the image type identified at step S104 is "3D surface," the 3D surface entry unit 13 in the comparison data entry unit 10 receives a 3D surface entry from the 3D CAD image DB11.

[Step S106] The image memory 14 in the comparison data entry unit 10 stores the 3D surface received at step S105 in its internal storage device.

[Step S107] Since the image type identified at step S104 is "surface measurement data," the surface point set entry unit 16 in the comparison data entry unit 10 receives a surface measurement data entry from the 3D measured image DB12.

[Step S108] The surface point set memory 17 in the comparison data entry unit 10 stores the surface measurement data received at step S107 in its internal storage device.

[Step S109] Since the image type identified at step S104 is "section measurement data," the volume point set entry unit 18 in the comparison data entry unit 10 receives a section measurement data entry from the 3D measured image DB12.

[Step S110] The volume point set memory 19 in the comparison data entry unit 10 stores the section measurement data received at step S109 in its internal storage device.

[Step S111] The comparison data entry unit 10 determines whether all necessary 3D images have been stored at steps S106, S108, and S110. If more 3D images are needed, then comparison data entry unit 10 goes back to step S104 to repeat another cycle of processing in a similar fashion. If a sufficient number of 3D images are ready, the comparison data entry unit 10 exits from the present process, thus returning to step S10 of FIG. 13.

FIG. 15 is a flowchart of voxel processing as part of the 3D image comparison process of FIG. 13. Step S20 (voxel processing) of FIG. 13 calls up the following sequence of steps. This voxel processing is performed by the voxel processor 20 in the 3D image comparison device.

[Step S201] The voxel processor 20 selects the comparison data stored at step S10.

[Step S202] Based on the measurement resolution received and stored at step S10, the voxel processor 20 determines voxel size.

[Step S203] The voxel processor 20 is supplied with the types of 3D images stored at step S10.

[Step S204] The voxel processor 20 determines which image type has been supplied at step S203. The voxel processor 20 then proceeds to step S205 if the image type is "3D surface," or to step S207 if it is "surface measurement data," or to S209 if it is "section measurement data."

[Step S205] Since the image type identified at step S204 is "3D surface," the voxel processor 20 selects and reads 3D surface data from the image memory 14 in the comparison data entry unit 10 and delivers it to the voxel generator 21.

[Step S206] With the 3D surface data delivered at step S205, the voxel generator 21 in the voxel processor 20 produces a 3D image in voxel form.

[Step S207] Since the image type identified at step S204 is "surface measurement data," the voxel processor 20 selects and reads surface measurement data from the surface point set memory 17 in the comparison data entry unit 10 and delivers it to the voxel generator 22.

[Step S208] With the surface measurement data delivered at step S207, the voxel generator 22 in the voxel processor 20 creates a 3D image in voxel form.

[Step S209] Since the image type identified at step S204 is section measurement data, the voxel processor 20 selects and reads section measurement data from the volume point set memory 19 in the comparison data entry unit 10 and delivers it to the voxel generator 22.

[Step S210] With the section measurement data delivered at step S209, the voxel generator 22 in the voxel processor 20 creates a 3D image in voxel form.

[Step S211] The voxel processor 20 determines whether all required 3D images have been created at steps S206, S208, and/or S210. If more 3D images are needed, then voxel processor 20 goes back to step S204 to repeat another cycle of processing in a similar fashion. If all required 3D images are ready, the voxel processor 20 exits from the present process, thus returning to step S20 of FIG. 13.

FIG. 16 is a flowchart of an image positioning process as part of the 3D image comparison process of FIG. 13. Step S30 (image positioning process) of FIG. 13 calls up the following sequence of steps. This image positioning process is performed by an image positioning processor 30 in the 3D image comparison device.

[Step S301] The image positioning processor 30 selects predefined fiducial points of two 3D images. One of the two 3D images is CAD data representing a 3D surface, and the other is surface measurement data or section measurement data obtained through measurement.

[Step S302] The image positioning processor 30 calculates the offsets of images from the fiducial points selected at step S301.

[Step S303] Based on the offsets calculated at step S302, the image positioning processor 30 moves the voxel-converted 3D images.

[Step S304] The image positioning processor 30 stores the 3D images moved at step S303 in an internal storage device. It then exits from the current process, thus returning to the step S30 of FIG. 13.

The following will describe the 3D image comparison process of the present invention. It has to be noted first that this 3D image comparison process is provided in several different versions for first to third embodiments of the invention. The version for the first embodiment is now referred to as the first image comparison process.

FIG. 17 is a flowchart of the first image comparison process as part of the 3D image comparison process of FIG. 13. Step S40 (image comparison process) of FIG. 13 calls up the following sequence of steps. This first image comparison process is executed by the voxel difference evaluator 40 of the proposed 3D image comparison device.

[Step S411] The voxel difference evaluator 40 selects a surface voxel. This selection can easily be made, since a surface voxel of a voxel-converted 3D image adjoins a voxel being set to OFF state while some other surrounding voxels are set to ON state.

[Step S412] The voxel difference evaluator 40 determines whether the voxel selected at step S411 is a surface voxel. If it is a surface voxel, the voxel difference evaluator 40 proceeds to step S413. If not, the voxel difference evaluator 40 returns to step S411.

[Step S413] Now that a surface voxel is selected at step S412, the voxel difference evaluator 40 performs an additional voxel conversion at a given test resolution. That is, the selected surface voxel is subdivided into fine voxels according to a given test resolution.

[Step S414] The voxel difference evaluator 40 compares the voxel-converted 3D surface and surface/section measurement data and counts their voxel mismatches.

[Step S415] Based on the number of voxel mismatches counted at step S414, the voxel difference evaluator 40 then determines a color depth as a representation scheme for the voxel of interest.

[Step S416] The voxel difference evaluator 40 determines whether all voxels are colored at step S415. In other words, the voxel difference evaluator 40 determines whether the voxel-converted 3D images are completely compared.

If there are still uncolored voxels, the voxel difference evaluator 40 returns the step S411 to repeat a similar process. If all voxels are colored, the voxel difference evaluator 40 exits from the present process and returns to step S40 of FIG. 13.

As can be seen from the above description, according to the first embodiment of the invention, the computer first converts 3D images B21 and B22 into voxel form and compares them to create a 3D differential image VB21.

With respect to a surface of the 3D differential image VB21, the computer produces a 3D fine differential image VB22 that provides details of the two 3D images B21 and B22 at a higher resolution than in the initial comparison.

Subsequently, the computer determines a representation scheme for visualizing a dissimilar part of the 3D differential image VB21, through a detailed comparison between the 3D images B21 and B22. In this step, the color of a voxel is determined from the number of mismatches find in that voxel.

The computer then outputs voxel comparison results on a display screen or the like by drawing the 3D differential image VB21 in the determined representation scheme.

In this way the present invention enables given 3D images to be compared more quickly and accurately. The comparison process handles images as a limited number of 3D voxels, rather than a set of countless points, thus making it possible to improve memory resource usage and reduce the number of computational cycles. A significant reduction of computational cycles can be achieved by omitting comparison of voxels other than those on the surface.

Thus far the explanation has assumed that the comparison process creates a 3D fine differential image for all surface voxels (coarse voxels) of a 3D image. However, it is also possible to produce and compare 3D fine differential images, not of all surface voxels, but of such coarse voxels that exhibit a mismatch.

[Second Embodiment]

A second embodiment of the invention will now be explained below. The second embodiment differs from the first embodiment in how a comparison is implemented. Specifically, according to the second embodiment, each surface of a reference voxel is displayed in a particular representation scheme that reflects the thickness of a dissimilar layer of voxels on that voxel surface after the 3D images are compared in the voxel domain.

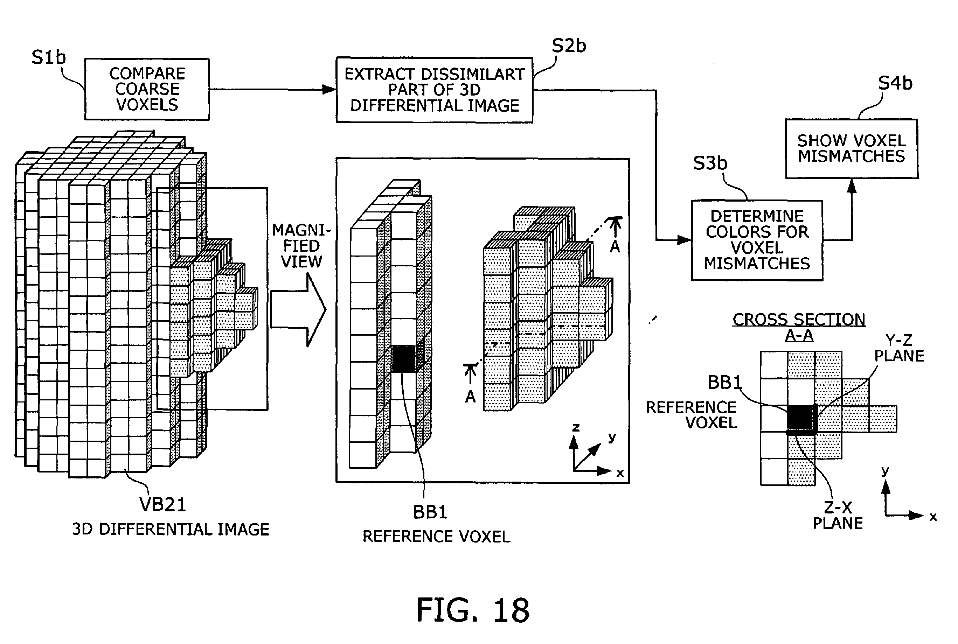

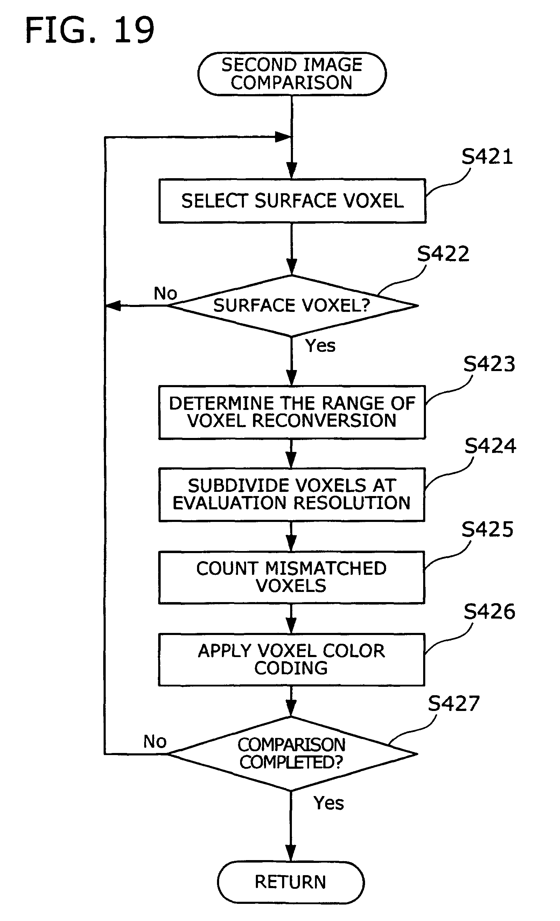

Referring now to FIGS. 18 and 19, the following will describe in detail the comparison process as part of a 3D image comparison program according to the second embodiment of the invention.

FIG. 18 gives an overview of a comparison process performed with a 3D image comparison program according to the second embodiment. According to the second embodiment, the comparison process uses voxels created in the same way as in the first embodiment and assigns a particular color to each surface of voxels in one 3D image to visualize its differences from the other. As will be described below, the color is determined in accordance with the number of voxels counted from each surface in the perpendicular (thickness) direction.

Referring to FIG. 18, given 3D images are compared on the basis of voxels created in the same way as in the first embodiment (step S1b). A dissimilar part is extracted from the resulting 3D differential image VB21 (step S2b). One matched surface voxel is then designated as a reference voxel BB1, and the number of voxel mismatches is counted in the direction perpendicular to each 3D geometric surface (z-y plane, z-x plane, y-x plane) of the reference voxel BB1, and based on the resultant count values (i.e., the thickness of a dissimilar layer of voxels), the representation scheme for that dissimilar part is determined (step S3b). More specifically, think of y-z and z-x planes in the illustrated cross section A-A, for example. The mismatch is evaluated in this case as three voxels on the y-z plane and two voxels on the z-x plane. Each surface of the matched surface voxel (reference voxel) is then displayed in a representation scheme that indicates a corresponding count value (step S4b). Such representation schemes include color designations in RGB or CMY mentioned earlier.

As can be seen from the above description, the present invention causes a computer to compare given 3D images on the basis of voxels created in the same way as in the first embodiment. A dissimilar part is extracted from the resulting 3D differential image VB21.

Then the computer counts voxel mismatches in the direction perpendicular to each 3D geometric surface (z-y plane, z-x plane, y-x plane) of a matched surface voxel (reference voxel BB1), and it determines a representation scheme based on that count (the thickness of a dissimilar layer of voxels).

The computer renders each surface of the matched surface voxel (reference voxel) in an appropriate representation scheme corresponding the count value.

The functions explained in the above overview are similar to what are shown in the functional block diagram of FIG. 4, except for the voxel difference evaluator 40. Accordingly, the following explanation of the second embodiment will focus on the additional functions of the voxel difference evaluator 40 (although it may include what have already been explained).

In the above overview, the reference voxel has been explained as a matched surface voxel that is immediately adjacent to a mismatched part (dissimilar part). The following explanation, however, will use the same term to refer to a fine voxel that is produced by selecting a matched surface voxel immediately adjacent to a mismatched part, determining a range surrounding it, and then subdividing voxels in that range at a given test resolution.

With its new functions, the voxel difference evaluator 40 compares two images that have been properly positioned by the image positioning processor 30, and visualizes the compared two images in a particular representation scheme. The term "particular representation scheme" refers herein to a technique of representing image differences by using, for example, RGB colors with different depths. More specifically, suppose that the voxel difference evaluator 40 selects a surface voxel. This selection triggers the voxel difference evaluator 40 to determine whether the selected voxel is a surface voxel or not. If this test reveals that a surface voxel is currently selected, then the voxel difference evaluator 40 determines which range of voxels need an additional conversion. That is, it identifies a range containing an image mismatch for more detailed comparison.

Within that determined range, the voxel difference evaluator 40 performs an additional voxel conversion at a given test resolution. That is, the surface voxels in the determined range are subdivided into fine voxels according to a given test resolution. The voxel difference evaluator 40 then counts voxel mismatches by examining the 3D surface and surface/section measurement data now in the form of fine voxels. More specifically, a fine surface voxel that belongs to the matched part of images is designated as a reference voxel, and the number of voxel mismatches (i.e.,

the thickness of a dissimilar layer of voxels) is counted in each direction perpendicular to different 3D geometric surfaces (e.g., z-y, z-x, and y-x planes) of that voxel.

Based on the voxel mismatch counts, the voxel difference evaluator 40 determines color depths, as a representation scheme, so that the voxel will be color-coded. That is, the voxel difference evaluator 40 assigns a particular representation scheme (color) to each surface of the reference voxel, which is a fine voxel on the surface of the matched part of images.

Subsequently, the voxel difference evaluator 40 determines whether all voxels are color-coded. This means that the voxel difference evaluator 40 determines whether the voxel-converted 3D images are completely compared.

Referring next to FIG. 19, the following will provide more specifics about the comparison process implemented in a 3D image comparison program according to the second embodiment of the invention. As mentioned earlier, the first to third embodiments of the invention use their respective versions of the 3D image comparison process. The version for the second embodiment is now referred to as the second image comparison process.

FIG. 19 is a flowchart of the second image comparison process as part of the 3D image comparison process of FIG. 13. Step 40 (image comparison process) of FIG. 13 calls up the following sequence of steps. This second image comparison process is executed by the voxel difference evaluator 40 of the proposed 3D image comparison device. While the reference voxel was explained in the foregoing overview as a matched surface voxel that is immediately adjacent to a mismatched part (dissimilar part), the following explanation will use the same term to refer to a fine voxel that is produced by selecting a matched surface voxel immediately adjacent to a mismatched part, determining a range surrounding it, and then subdividing voxels in that range at a given test resolution.

[Step S421] The voxel difference evaluator 40 selects a surface voxel. This selection can easily be made, since a surface voxel of a voxel-converted 3D image adjoins a voxel being set to OFF state while some other surrounding voxels are set to ON state.

[Step S422] The voxel difference evaluator 40 determines whether the voxel selected at step S421 is a surface voxel. If it is a surface voxel, the voxel difference evaluator 40 proceeds to step S423. If not, the voxel difference evaluator 40 returns to step S421.

[Step S423] Now that a surface voxel is selected at step S422, the voxel difference evaluator 40 determines what range of voxels need an additional conversion. That is, it identifies a range containing an image mismatch for more detailed comparison.

[Step S424] Within the range determined at step S423, the voxel difference evaluator 40 performs a reconversion of voxels at a given test resolution. The surface voxels in the determined range are thus subdivided into fine voxels according to a given test resolution.

[Step S425] The voxel difference evaluator 40 compares the reconverted 3D surface and surface/section measurement data and counts their voxel mismatches. More specifically, a fine surface voxel that belongs to the matched part of images is designated as a reference voxel, and the number of voxel mismatches (i.e., the thickness of a dissimilar layer of voxels) is counted in each direction perpendicular to different 3D geometric surfaces (e.g., z-y plane, z-x plane, y-x plane) of that voxel.

[Step S426] Based on the voxel mismatch counts obtained at step S425, the voxel difference evaluator 40 then determines color depths as part of the representation scheme to be used, so that voxels will be color-coded. That is, the voxel difference evaluator 40 assigns a particular representation scheme (color) to each surface of the reference voxel, which is a fine voxel on the surface of the matched part of images.

[Step S427] The voxel difference evaluator 40 determines whether all voxels are colored at step S426. This means that the voxel difference evaluator 40 determines whether the voxel-converted 3D images are completely compared.

If there are still uncolored voxels, the voxel difference evaluator 40 returns the step S421 to repeat a similar process. If all voxels are colored, the voxel difference evaluator 40 exits from the present process and returns to step S40 of FIG. 13.

As can be seen from the above, the comparison process according to the second embodiment visualizes the difference with colors assigned on each surface of a 3D object, rather than drawing voxels with some depth, in order to reduce the consumption of computational resources (e.g., memory capacity, disk area, computation time). Actually, the proposed technique reduces resource consumption to a few tenths. The depth of a color representing a mismatch is proportional to the thickness of a dissimilar layer of voxels. Further, the color depth is normalized with respect to the maximum depth of all colors assigned.

The reference voxel has been explained as a matched surface voxel that is immediately adjacent to a mismatched part (dissimilar part), or as a fine voxel that is produced by selecting a matched surface voxel immediately adjacent to a mismatched part, determining a range surrounding it, and then subdividing voxels in that range at a given test resolution. As another option, the reference voxel may simply be a voxel selected from among those on the matched surfaces.

[Third Embodiment]

A third embodiment of the invention will now be explained below. The third embodiment differs from the first embodiment in its implementation of a comparison process. Specifically, the third embodiment compares 3D images on an individual voxel basis, counts all surface voxels that constitute a dissimilar part of the images, calculates the volume of that dissimilar part, and displays those voxels using an appropriate representation scheme that reflects the ratio of the number of surface voxels to the volume.

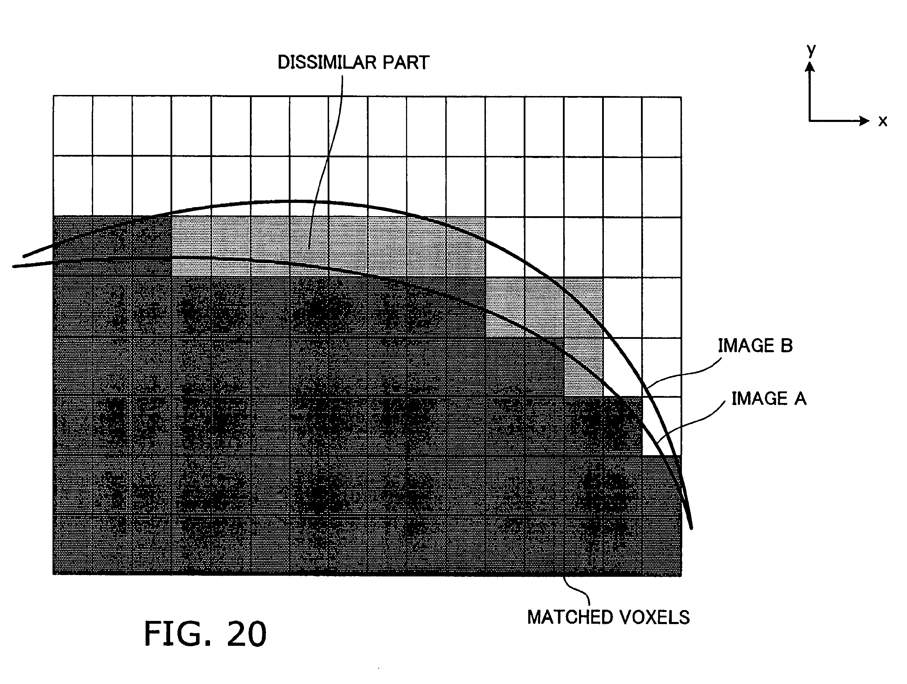

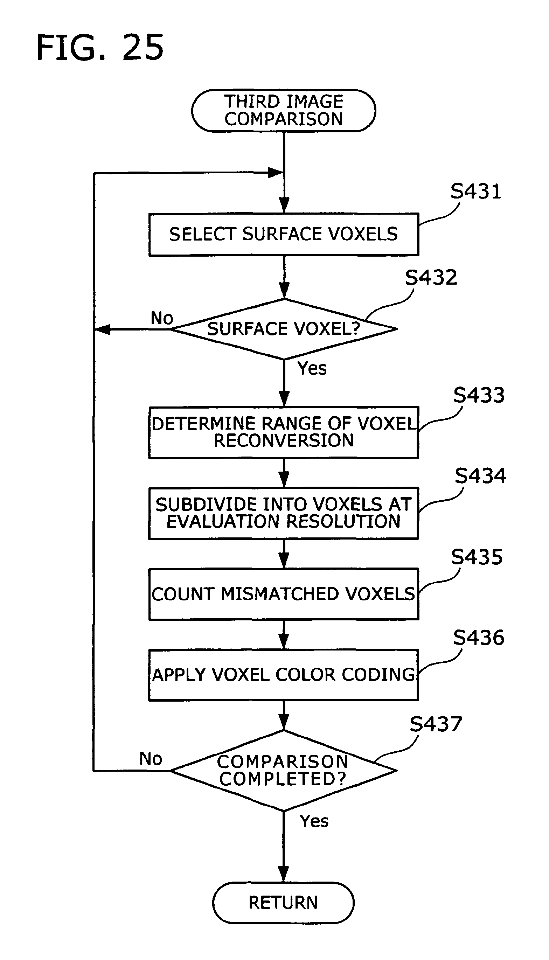

Referring now to FIGS. 20 and 25, the following will describe in detail the comparison process as part of a 3D image comparison program according to the third embodiment of the invention.

FIG. 20 shows difference evaluation (1) performed as part of a comparison process of a 3D image comparison program according to the third embodiment of the invention. The difference between two images are identified as a dissimilar part of the voxels produced in the first embodiment. This dissimilar portion, or "island," consists of one or more voxels, and the comparison method of the third embodiment gives each such island a color that represents a ratio of surface voxels of that island to the total number of voxels forming that island. The following will provide more specifics about how to determine a color for each island (hereafter, dissimilar part).

Referring to FIG. 20, two 3D images A and B are converted into voxel form and compared in the same way as in the first embodiment. The comparison method of the third embodiment quantifies the dissimilarity in the following way:

- Volume: 12 voxels
- Surface area (Y direction) : 25 voxel surfaces

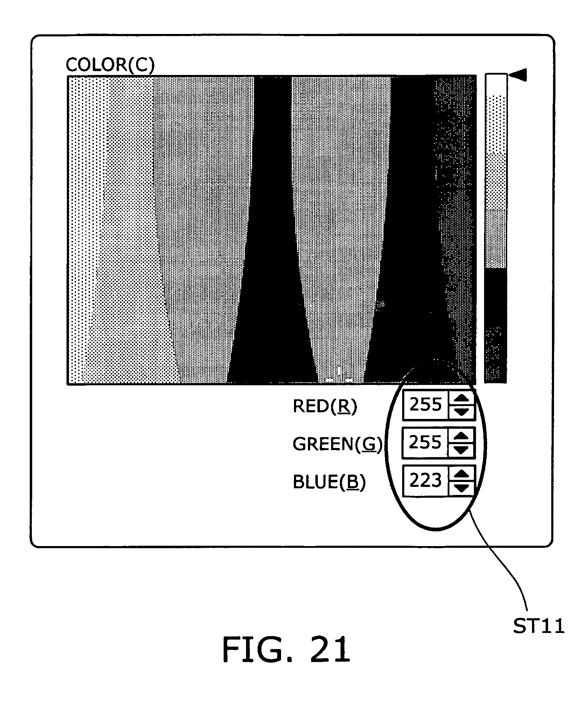

The ratio of surface voxels to total voxels is 25/12 in this case, which indicates that the dissimilar part of interest is relatively thin. A particular color is set to such a volume-to-surface ratio, as shown in FIG. 21.

FIG. 21 shows a color (light color) determined by the comparison process as part of the 3D image comparison program according to the third embodiment.

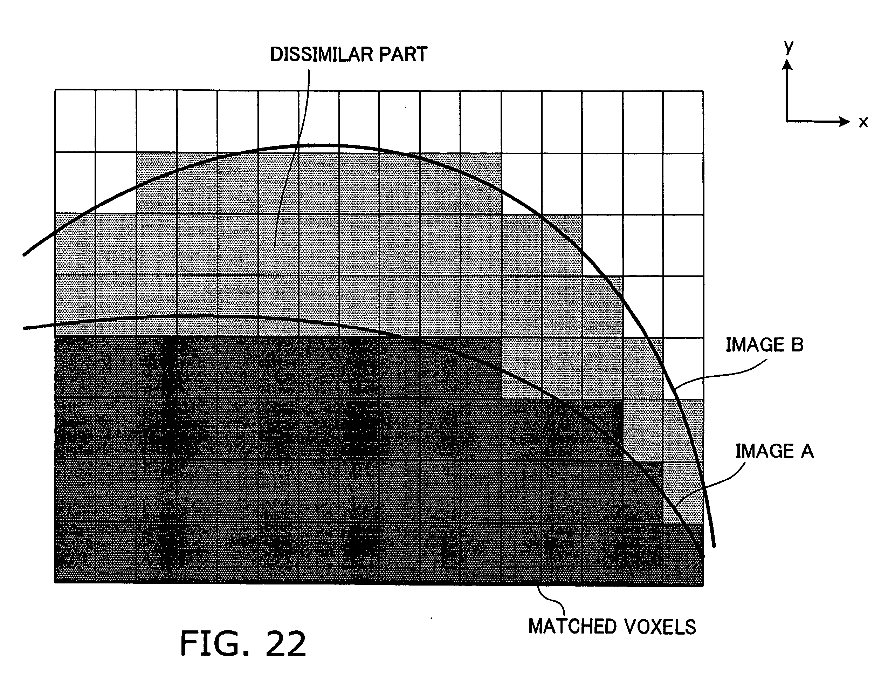

Colors representing dissimilarities are specified in the RGB domain. In this example of FIG. 21, the intensity of blue (B) is modified to express the degree of dissimilarities. The control boxes in area ST11 are set to [255 (R), 255 (G), 223 (B)] to indicate the presence of a thin layer of voxel mismatches on a certain portion of the surface. Particularly, the value of 223(B) gives a light color, which indicates that the dissimilar part is a thin layer. If the blue level is set to, for example, 96(B), it indicates the presence of a thick layer of voxel mismatches as a dissimilar part of images. The following will discuss more about this case, with reference to FIG. 22.

FIG. 22 shows difference evaluation (2) performed as part of the comparison process of the 3D image comparison program according to the third embodiment, and particularly the case where the voxel mismatch is greater than the one explained in FIG. 20.

Referring to FIG. 22, two 3D images A and B are converted into voxel form and compared in the same way as in the first embodiment. The comparison method of the third embodiment quantifies the dissimilarity in the following way:

- Volume: 43 voxels.
- Surface area (Y direction): 32 voxel surfaces

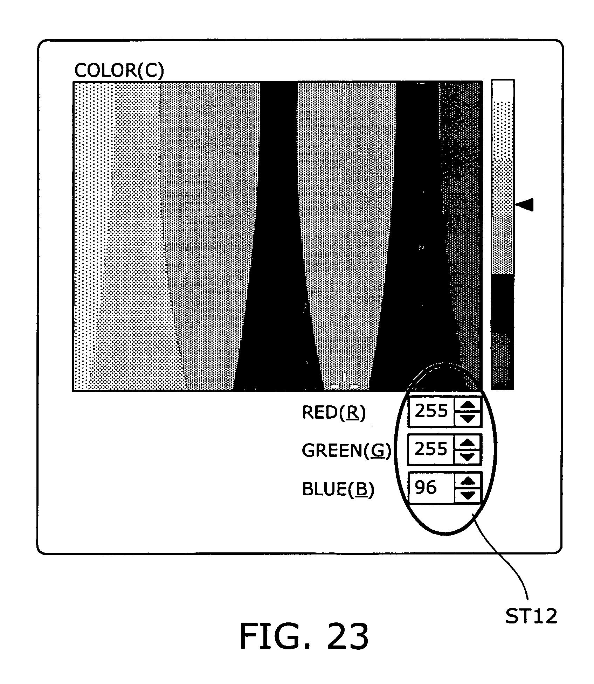

The ratio of surface voxels to total voxels is 32/43 in this case, which indicates that the dissimilar part of interest is relatively thick. A particular color is set to such a volume-to-surface ratio, as shown in FIG. 23.

FIG. 23 shows a color (deep color) determined by the comparison process as part of the 3D image comparison program according to the third embodiment.

Generally a color representing a dissimilarity of images is specified in the RGB domain. In the example of FIG. 21, the intensity of blue (B) is modified to express the degree of dissimilarity. The control boxes in area ST12 are set to [255 (R), 255 (G), 96(B)] to indicate the presence of a thick layer of voxel mismatches on a certain portion of the surface. Particularly, the value of 96(B) gives a deep color, which indicates that the dissimilar part is a thick layer.

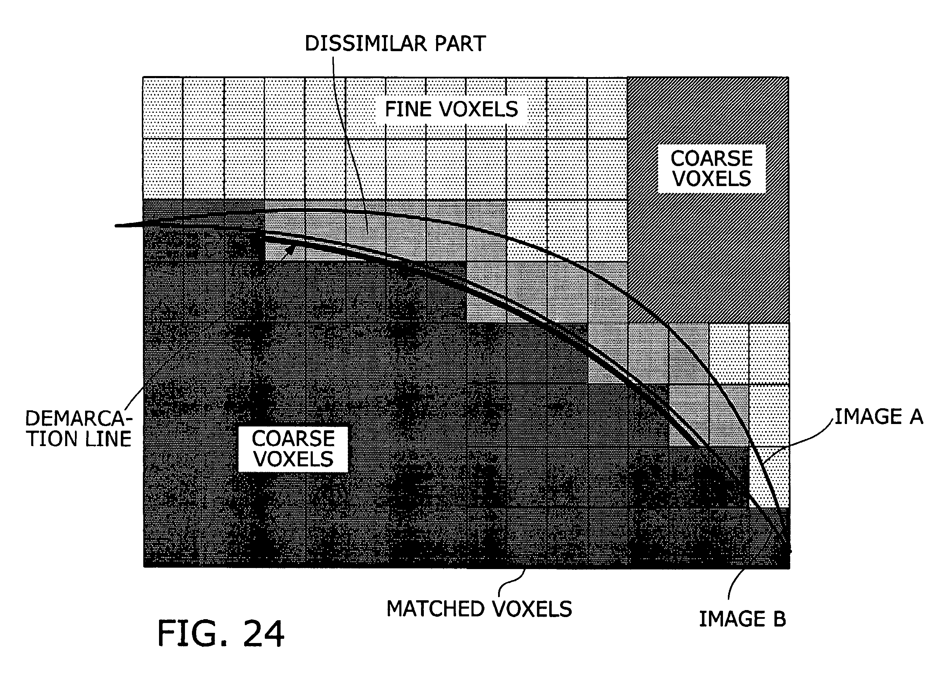

If a mismatch is found, that portion is subdivided into fine voxels for a further evaluation, and a chunk of mismatched fine voxels is then colored uniformly. Such a colored area on the compared 3D surface is saved as a partial surface. An example of this difference evaluation is shown in FIG. 24.

FIG. 24 shows difference evaluation (3) performed as part of the comparison process of the 3D image comparison program according to the third embodiment. In FIG. 24, the voxels containing a mismatch are subdivided into fine voxels for detailed comparison. The boldest line is a demarcation line that separates the dissimilar part from other voxels. Actually, what FIG. 24 shows is a result of a fine voxel comparison made with the voxels shown in FIG. 20. This detailed comparison is similar to what have been explained in FIGS. 20 and 22, and that explanation is not repeated here.

The functions explained in the above overview are similar to what are shown in the functional block diagram of FIG. 4, except for the voxel difference evaluator 40. Accordingly, the following explanation of the third embodiment will focus on the additional functions of the voxel difference evaluator 40 (although it may include what have already been explained). The following explanation will use the term "reference voxel" to refer to a fine voxel that is produced by selecting a matched surface voxel immediately adjacent to a mismatched part, determining a range surrounding it, and then subdividing voxels in that range at a given test resolution. The third embodiment, however, also allows the reference voxel to be a matched surface voxel that is immediately adjacent to a mismatched part (dissimilar part). As another option, the reference voxel may simply be a voxel selected from among those on the matched surfaces.

With its new functions, the voxel difference evaluator 40 compares two images that have been properly positioned by the image positioning processor 30, and visualizes the compared two images in a particular representation scheme. The term "particular representation scheme" refers herein to a technique of representing image differences by using, for example, RGB colors with different depths. More specifically, suppose that the voxel difference evaluator 40 selects a surface voxel. This selection triggers the voxel difference evaluator 40 to determine whether the selected voxel is a surface voxel or not. Now that a surface voxel is selected, the voxel difference evaluator 40 determines what range of voxels need an additional conversion. That is, it identifies a range containing an image mismatch for more detailed comparison.

Within that determined range, the voxel difference evaluator 40 performs an additional voxel conversion at a given test resolution. The surface voxels in the determined range are thus subdivided into fine voxels according to a given test resolution. Subsequently, the voxel difference evaluator 40 then counts voxel mismatches by examining the 3D surface and surface/section measurement data now in the form of fine voxels. It then calculates the ratio of surface voxels to total voxels for each dissimilar part of the 3D differential image.

Based on the calculated ratio, the voxel difference evaluator 40 determines color depths, as part of a representation scheme to be used, so that the voxels will be color-coded. That is, the voxel difference evaluator 40 determines a representation scheme (i.e., color) for every dissimilar part consisting of voxels flagged as being a mismatch.

Subsequently, the voxel difference evaluator 40 determines whether all voxels are color-coded. This means that the voxel difference evaluator 40 determines whether the voxel-converted 3D images are completely compared.

Referring next to FIG. 25, the following will provide more specifics about the comparison process implemented in a 3D image comparison program according to the third embodiment of the invention. As mentioned earlier, the first to third embodiments of the invention use their respective versions of the 3D image comparison process. The version for the third embodiment is now referred to as the second image comparison process.

FIG. 25 is a flowchart of a third image comparison process as part of the 3D image comparison process of FIG. 13. Step 40 (image comparison process) of FIG. 13 calls up the following sequence of steps. This third image comparison process is executed by the voxel difference evaluator 40 of the proposed 3D image comparison device.

[Step S431] The voxel difference evaluator 40 selects a surface voxel. This selection can easily be made, since a surface voxel of a voxel-converted 3D image adjoins a voxel being set to OFF state while some other surrounding voxels are set to ON state.

[Step S432] The voxel difference evaluator 40 determines whether the voxel selected at step S431 is a surface voxel. If it is a surface voxel, the voxel difference evaluator 40 proceeds to step S433. If not, the voxel difference evaluator 40 returns to step S431.

[Step S433] Now that a surface voxel is selected at step S432, the voxel difference evaluator 40 determines what range of voxels need an additional conversion. That is, it identifies a range containing an image mismatch for more detailed comparison.

[Step S434] Within the range determined at step S433, the voxel difference evaluator 40 performs an additional voxel conversion at a given test resolution. The surface voxels in the determined range are thus subdivided into fine voxels according to a given test resolution.

[Step S435] The voxel difference evaluator 40 compares the reconverted 3D surface and surface/section measurement data and counts their voxel mismatches. It then calculates the ratio of surface voxels to total voxels for each dissimilar part of the 3D differential image.

[Step S436] Based on the ratio of voxel mismatches calculated at step S435, the voxel difference evaluator 40 determines a color depth as part of a representation scheme to be used, so that voxels will be color-coded. That is, the voxel difference evaluator 40 determines a representation scheme (i.e., color) for every dissimilar part consisting of voxels flagged as being a mismatch.

[Step S437] The voxel difference evaluator 40 determines whether all voxels are colored at step S436. This means that the voxel difference evaluator 40 determines whether the voxel-converted 3D images are completely compared.

If there are still uncolored voxels, the voxel difference evaluator 40 returns the step S431 to repeat a similar process. If all voxels are colored, the voxel difference evaluator 40 exits from the present process and returns to step S40 of FIG. 13.

As can be seen from the above, the comparison process according to the third embodiment visualizes the difference by giving a color to the dissimilar part as a whole, rather than drawing voxels with some depth, in order to reduce the computational resource consumed (e.g., memory capacity, disk area, computation time). This technique reduces resource consumption to a few tenths. The ratio of surface voxels to total voxels is in a range of zero, or nearly zero (more precisely), to two. Accordingly, a lightest color is assigned to the maximum ratio, and a deepest color to the minimum ratio. The user can see the size of a dissimilar part from a 3D picture on the screen.

[Computational Resource Usage in First Embodiment]

Lastly, evaluation of computational resource usage in the first embodiment will be described by way of example.

The first embodiment of the invention offers the following three advantages:

- Significant reduction of computational burden, and consequent quick response
- Detailed comparison with realistic amounts of computational resources (memory, disks, etc.)
- Improved efficiency of comparison tasks

For example, computational resource usage is evaluated as follows.

Recall the 3D surface given by equation (1), and suppose that a conventional method is used to calculate minimum distances for many measurement points shown in Table (1). The amount of computation is then estimated, considering the following factors:

- Finding a nearest point on a surface takes several hundreds of floating point operations.
- Calculation of a distance from that point to the measurement point of interest takes several tens of floating point operations.
- For each measurement point, one to several tens of near surfaces should be examined.

This means that several tens of thousands of floating point operations are required to calculate a minimum distance. Since this calculation is repeated ten billion times, the total computation time will be about 30 hours, assuming the use of a 1-GHz CPU capable of two simultaneous floating point operations per cycle.

In contrast to the above, the method according to the first embodiment of the invention would require only 50 billion floating point operations, since it places a body defined by a plurality of surfaces in a computational space, divides the space into voxels with a given measurement resolution, and applies voxel-by-voxel logical operations. The estimated computation time is 25 seconds, under the assumption that the same computer is used. As this example demonstrates, the first embodiment of the present invention allows a considerable reduction of computation times, in comparison to conventional methods. Also, the proposed methods according to the first embodiment is comparable to conventional methods in terms of accuracy, since its entire computational space is divided into voxels at the measurement accuracy.

All the processes described so far can be implemented as computer programs. A computer system executes such programs to provide the intended functions of the present invention. Program files are installed in a computer's hard disk drive or other local mass storage device, and they can be executed after being loaded to the main memory. Such computer programs are stored in a computer-readable medium for the purpose of storage and distribution. Suitable computer-readable storage media include magnetic storage media, optical discs, magnetooptical storage media, and semiconductor memory devices. Magnetic storage media include hard disks, floppy disks (FD), ZIP (one type of magnetic discs), and magnetic tapes. Optical discs include digital versatile discs (DVD), DVD random access memory (DVD-RAM), compact disc read-only memory (CD-ROM), CD-Recordable (CD-R), and CD-Rewritable (CD-RW). Magneto-optical storage media include magnetooptical discs (MO). Semiconductor memory devices include flash memories.

Portable storage media, such as DVD and CD-ROM, are suitable for the distribution of program products. It is also possible to upload computer programs to a server computer for distribution to client computers over a network.

The above explanations are summarized as follows. According to the first aspect of the present invention, two voxel-converted 3D images are compared, and a particular surface identified in this comparison is subdivided for further comparison at a higher resolution. The comparison results are displayed in a representation scheme that is determined from the result of the second comparison. The proposed technique enables 3D images to be compared quickly and accurately.

According to the second aspect of the present invention, given 3D images are compared, and a representation scheme is determined from the number of voxel mismatches counted perpendicularly to each surface of a reference voxel. The comparison results are displayed in the determined representation scheme. This technique enables 3D images to be compared quickly and accurately.

According to the third aspect of the present invention, given 3D images are compared, and a representation scheme is determined from a surface-to-volume ratio of a dissimilar part of the 3D images under test. The comparison results are displayed in the determined representation scheme. This technique enables 3D images to be compared quickly and accurately.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

**Claims**

1. A three-dimensional (3D) comparison program for comparing 3D images and visualizing differences therebetween, the program causing a computer to perform the steps of:

    producing a 3D differential image by making a comparison between first and second 3D images which have previously been converted into voxel form;
    producing, with respect to a surface of the 3D differential image, a 3D fine differential image that provides details of the first and second 3D images at a higher resolution than in the comparison;
    determining a representation scheme for visualizing a dissimilar part of the 3D differential image, through a detailed comparison between the first and second 3D images in the 3D fine differential image; and
    displaying voxel comparison results by drawing the 3D differential image in the representation scheme that is determined.

2. The 3D image comparison program according to claim 1, wherein the representation scheme gives color-coded representation.

3. The 3D image comparison program according to claim 2, wherein the color-coded representation uses an additive mixture of three primary colors of light which include red, green, and blue.

4. The 3D image comparison program according to claim 2, wherein the color-coded representation uses a subtractive mixture of three complementary primary colors including cyan, magenta, and yellow.

5. The 3D image comparison program according to claim 4, wherein the subtractive mixture of colors further uses black in addition to the three complementary primary colors including cyan, magenta, and yellow.

6. The 3D image comparison program according to claim 1, wherein the comparison is performed with Boolean operations of voxel data representing the first 3D image and second 3D image.

7. The 3D image comparison program according to claim 1, wherein the detailed comparison is performed by finding mismatches between the first and second 3D images in the 3D fine differential image.

8. The 3D image comparison program according to claim 1, wherein the first 3D image is created by applying voxel conversion to 3D surface data that is given in CAD data form.

9. The 3D image comparison program according to claim 1, wherein the second 3D image is created by applying voxel conversion to a set of points given as measurement data.

10. A three-dimensional (3D) comparison program for comparing 3D images and displaying differences therebetween, the program causing a computer to perform the steps of:

    producing a 3D differential image by making a comparison between first and second 3D images which have previously been converted into voxel form;
    extracting a dissimilar part from the 3D differential image, counting voxel mismatches perpendicularly from each 3D geometric surface of a matched surface voxel, and based on the number of voxel mismatches, determining a representation scheme for visualizing the voxel mismatches; and

displaying the 3D differential image in the determined representation scheme.

11. The 3D image comparison program according to claim 10, wherein the representation scheme gives color-coded representation.

12. The 3D image comparison program according to claim 11, wherein the color-coded representation uses an additive mixture of three primary colors of light which include red, green, and blue.

13. The 3D image comparison program according to claim 11, wherein the color-coded representation uses a subtractive mixture of three complementary primary colors including cyan, magenta, and yellow.

14. The 3D image comparison program according to claim 13, wherein the subtractive mixture of colors further uses black in addition to the three complementary primary colors including cyan, magenta, and yellow.

15. The 3D image comparison program according to claim 10, wherein said displaying step displays each surface of a voxel of the 3D differential image based on the number of voxel mismatches for each 3D surface.

16. The 3D image comparison program according to claim 10, wherein the first 3D image is created by applying voxel conversion to 3D surface data that is given in CAD data form.

17. The 3D image comparison program according to claim 10, wherein the second 3D image is created by applying voxel conversion to a set of points given as measurement data.

18. A three-dimensional (3D) comparison program for comparing 3D images and displaying differences therebetween, the program causing a computer to perform the steps of:

producing a 3D differential image by making a comparison between first and second 3D images which have previously been converted into voxel form;
calculating a ratio of the number of surface voxels of a dissimilar part of the 3D differential image to the total number of voxels constituting the dissimilar part, and based on the ratio, determining a representation scheme for visualizing voxel mismatches on the 3D differential image; and
displaying the dissimilar part of the 3D differential image in the representation scheme determined from the ratio.

19. The 3D image comparison program according to claim 18, wherein the representation scheme gives color-coded representation.

20. The 3D image comparison program according to claim 19, wherein the color-coded representation uses an additive mixture of three primary colors of light which include red, green, and blue.

21. The 3D image comparison program according to claim 19, wherein the color-coded representation uses a subtractive mixture of three complementary primary colors including cyan, magenta, and yellow.

22. The 3D image comparison program according to claim 21, wherein the subtractive mixture of colors further uses black in addition to the three complementary primary colors including cyan, magenta, and yellow.

23. The 3D image comparison program according to claim 18, wherein the first 3D image is created by applying voxel conversion to 3D surface data that is given in CAD data form.

24. The 3D image comparison program according to claim 18, wherein the second 3D image is created by applying voxel conversion to a set of points given as measurement data.

25. A three-dimensional (3D) comparison method for comparing 3D images and displaying differences therebetween, the method comprising the steps of:

producing a 3D differential image by making a comparison between first and second 3D images which have previously been converted into voxel form;
producing, with respect to a surface of the 3D differential image, a 3D fine differential image that provides details of the first and second 3D images at a higher resolution than in the comparison;
determining a representation scheme for visualizing a dissimilar part of the 3D differential image, through a detailed comparison between the first and second 3D images in the 3D fine differential image; and
displaying voxel comparison results by drawing the 3D differential image in the representation scheme.

26. A three-dimensional (3D) comparison method for comparing 3D images and displaying differences therebetween, the method comprising the steps of:

producing a 3D differential image by making a comparison between first and second 3D images which have previously been converted into voxel form;
extracting a dissimilar part from the 3D differential image, counting voxel mismatches perpendicularly from each 3D geometric surface of a matched surface voxel, and based on the number of voxel mismatches, determining a representation scheme for visualizing the voxel mismatches; and
displaying the 3D differential image in the determined representation scheme.

27. A three-dimensional (3D) comparison method for comparing 3D images and displaying differences therebetween, the method comprising the steps of:

producing a 3D differential image by making a comparison between first and second 3D images which have previously been converted into voxel form;
calculating a ratio of the number of surface voxels of a dissimilar part of the 3D differential image to the total number of voxels constituting the dissimilar part, and based on the ratio, determining a representation scheme for visualizing voxel mismatches on the 3D differential image; and
displaying the dissimilar part of the 3D differential image in the representation scheme determined from the ratio.

28. A three-dimensional (3D) comparison device for comparing 3D images and displaying differences therebetween, comprising:

a differential image generator that produces a 3D differential image by making a comparison between first and second 3D images which have previously been converted into voxel form;
a fine differential image generator that produces, with respect to a surface of the 3D differential image, a 3D fine differential image that provides details of the first and second 3D images at a higher resolution than in the comparison;
a display scheme determiner that determines a representation scheme for visualizing a dissimilar part of the 3D differential image, through a detailed comparison between the first and second 3D images in the 3D fine differential image; and
a difference display unit that displays voxel comparison results by drawing the 3D differential image in the determined representation scheme.

29. A three-dimensional (3D) comparison device for comparing 3D images and displaying differences therebetween, comprising:

a differential image generator that produces a 3D differential image by making a comparison between first and second 3D images which have previously been converted into voxel form;
a surface-specific difference evaluator that extracts a dissimilar part from the 3D differential image, counting voxel mismatches perpendicularly from each 3D geometric surface of a matched surface voxel, and based on the number of voxel mismatches, determines a representation scheme for visualizing the voxel mismatches; and
a surface-specific difference display unit that displays the 3D differential image in the determined representation scheme.

30. A three-dimensional (3D) comparison device for comparing 3D images and displaying differences therebetween, comprising:

a differential image generator that produces a 3D differential image by making a comparison between first and second 3D images which have previously been converted into voxel form;
a difference ratio calculator that calculates a ratio of the number of surface voxels of a dissimilar part of the 3D differential image to the total number of voxels constituting the dissimilar part, and based on the ratio, determining a representation scheme for visualizing voxel mismatches on the 3D differential image; and

a difference ratio display unit that displays the dissimilar part of the 3D differential image in the representation scheme determined from the ratio.

31. A computer-readable storage medium storing a three-dimensional (3D) comparison program for comparing 3D images and displaying differences therebetween, the program causing a computer to perform the steps of:

producing a 3D differential image by making a comparison between first and second 3D images which have previously been converted into voxel form;

producing, with respect to a surface of the 3D differential image, a 3D fine differential image that provides details of the first and second 3D images at a higher resolution than in the comparison;

determining a representation scheme for visualizing a dissimilar part of the 3D differential image, through a detailed comparison between the first and second 3D images in the 3D fine differential image; and

displaying voxel comparison results by drawing the 3D differential image in the determined representation scheme.

32. A computer-readable storage medium storing a three-dimensional (3D) comparison program for comparing 3D images and displaying differences therebetween, the program causing a computer to perform the steps of:

producing a 3D differential image by making a comparison between first and second 3D images which have previously been converted into voxel form;

extracting a dissimilar part from the 3D differential image, counting voxel mismatches perpendicularly from each 3D geometric surface of a matched surface voxel, and based on the number of voxel mismatches, determining a representation scheme for visualizing voxel mismatches; and

displaying the 3D differential image in the determined representation scheme.

33. A computer-readable storage medium storing a three-dimensional (3D) comparison program for comparing 3D images and displaying differences therebetween, the program causing a computer to perform the steps of:

producing a 3D differential image by making a comparison between first and second 3D images which have previously been converted into voxel form;

calculating a ratio of the number of surface voxels of a dissimilar part of the 3D differential image to the total number of voxels constituting the dissimilar part, and based on the ratio, determining a representation scheme for visualizing voxel mismatches on the 3D differential image; and

displaying the dissimilar part of the 3D differential image in the representation scheme determined from the ratio.

3D IMAGE B1

3D IMAGE B2

COMPARE

S1 COMPARE COARSE VOXELS

VB1 3D DIFFERENTIAL IMAGE

S2 CREATE FINE SURFACE VOXELS

S3 SELECT COLORS FOR VOXEL MISMATCHES

S4 DISPLAY VOXEL COMPARISON RESULTS

DRAWING COLORED PICTURE

ASSIGN RGB VALUES

R G B

[MISMATCHES]

VB2 3D FINE DIFFERENTIAL IMAGE

FIG. 1

EP 1 519 318 A1

FIG. 2

FIG. 3

FIG. 4

- DB11 — 3D CAD IMAGE
- DB12 — 3D MEASURED IMAGE

**10 COMPARISON DATA ENTRY UNIT**

- 11 MEASUREMENT RESOLUTION ENTRY UNIT
- 12 MEASUREMENT RESOLUTION MEMORY
- 13 3D SURFACE ENTRY UNIT
- 14 IMAGE MEMORY
- 15 POINT SET PROCESS SWITCH
- 16 SURFACE POINT SET ENTRY UNIT
- 17 SURFACE POINT SET MEMORY
- 18 VOLUME POINT SET ENTRY UNIT
- 19 VOLUME POINT SET MEMORY

**20 VOXEL PROCESSOR**

- 21 VOXEL GENERATOR
- 22 VOXEL GENERATOR
- 23 VOXEL MEMORY

**30 IMAGE POSITIONING PROCESSOR**

**40 VOXEL DIFFERENCE EVALUATOR**

**50 VOXEL OVERLAYING PROCESSOR**

EP 1 519 318 A1

3D IMAGE
B21

COMPARE

3D IMAGE
B22

VB21

3D
DIFFERENTIAL
IMAGE

# FIG. 5

FIG.6

COLOR(C)

RED(R) 255 ▲▼

GREEN(G) 255 ▲▼

BLUE(B) 255 ▲▼

ST1

# FIG. 7

FIG. 8

COLOR(C)

RED(R)   0

GREEN(G)   255

BLUE(B)   255

ST3

FIG. 9

FIG. 10

DATA STRUCTURE
D1

FIG. 11

| DATA TYPE FIELD D11 | DATA NUMBER FIELD D12 | LOCATION DATA FIELD D13 | | | | | | |
|---|---|---|---|---|---|---|---|---|
| GRID | 1 | 0.0000000.00000050.00000 | | | | | | |
| GRID | 2 | 50.000000.00000050.00000 | | | | | | |
| GRID | 3 | 50.0000050.0000050.00000 | | | | | | |
| GRID | 4 | 0.00000050.0000050.00000 | | | | | | |
| GRID | 5 | 50.0000050.000000.000000 | | | | | | |
| GRID | 6 | 50.000000.0000000.000000 | | | | | | |
| GRID | 7 | 0.0000000.0000000.000000 | | | | | | |
| GRID | 8 | 0.00000050.000000.000000 | | | | | | |
| GRID | 9 | 25.000000.00000050.00000 | | | | | | |
| GRID | 10 | 25.000000.0000000.000000 | | | | | | |
| GRID | 11 | 25.0000050.000000.000000 | | | | | | |
| GRID | 12 | 25.0000050.0000050.00000 | | | | | | |
| GRID | 13 | 0.00000025.0000050.00000 | | | | | | |
| GRID | 14 | 0.00000025.000000.000000 | | | | | | |
| GRID | 15 | 50.0000025.000000.000000 | | | | | | |
| GRID | 16 | 50.0000025.0000050.00000 | | | | | | |
| GRID | 17 | 0.0000000.00000025.00000 | | | | | | |
| GRID | 18 | 0.00000050.0000025.00000 | | | | | | |
| GRID | 19 | 50.0000050.0000025.00000 | | | | | | |
| GRID | 20 | 50.000000.00000025.00000 | | | | | | |
| GRID | 21 | 25.000000.00000025.00000 | | | | | | |
| GRID | 22 | 0.00000025.0000025.00000 | | | | | | |
| GRID | 23 | 25.0000050.0000025.00000 | | | | | | |
| GRID | 24 | 50.0000025.0000025.00000 | | | | | | |
| GRID | 25 | 25.0000025.0000050.00000 | | | | | | |
| GRID | 26 | 25.0000025.000000.000000 | | | | | | |
| GRID | 27 | 25.0000025.0000025.00000 | | | | | | |
| CHEXA | 1 | 17 | 21 | 27 | 22 | 7 | 10 | 26 | 14 |
| CHEXA | 2 | 1 | 9 | 25 | 13 | 17 | 21 | 27 | 22 |
| CHEXA | 3 | 22 | 27 | 23 | 18 | 14 | 26 | 11 | 8 |
| CHEXA | 4 | 13 | 25 | 12 | 4 | 22 | 27 | 23 | 18 |
| CHEXA | 5 | 21 | 20 | 24 | 27 | 10 | 6 | 15 | 26 |
| CHEXA | 6 | 9 | 2 | 16 | 25 | 21 | 20 | 24 | 27 |
| CHEXA | 7 | 27 | 24 | 19 | 23 | 26 | 15 | 5 | 11 |
| CHEXA | 8 | 25 | 16 | 3 | 12 | 27 | 24 | 19 | 23 |

D2 DATA STRUCTURE

*** RECORD7 ***
2.50000000e+001 2.50000000e+001 2.50000004e+001
⋮

*** RECORD9 ***
1 2 5 4 10 11 14 13
2 3 6 5 11 12 15 14
4 5 8 7 13 14 17 16
5 6 9 8 14 15 18 17
10 11 14 13 19 20 23 22
11 12 15 14 20 21 24 23
13 14 17 16 22 23 26 25
14 15 18 17 23 24 27 26

# FIG. 12

```
              ┌──────────────┐
              │    START     │
              └──────────────┘
                     │
                     ▼
        ┌─────────────────────────┐    S10
        │ COMPARISON DATA ENTRY   │
        └─────────────────────────┘
                     │
                     ▼
        ┌─────────────────────────┐    S20
        │    VOXEL PROCESSING     │
        └─────────────────────────┘
                     │
                     ▼
        ┌─────────────────────────┐    S30
        │    IMAGE POSITIONING    │
        └─────────────────────────┘
                     │
                     ▼
        ┌─────────────────────────┐    S40
        │    IMAGE COMPARISON     │
        └─────────────────────────┘
                     │
                     ▼
        ┌─────────────────────────┐    S50
        │ DRAW COMPARISON RESULTS │
        └─────────────────────────┘
                     │
                     ▼
        ┌─────────────────────────┐    S60
        │   OVERLAY COMPARISON    │
        │  RESULTS ON 3D IMAGE    │
        └─────────────────────────┘
                     │
                     ▼
              ┌──────────────┐
              │     END      │
              └──────────────┘
```

# FIG. 13

**FIG. 14**

COMPARISON
DATA ENTRY

RECEIVE
MEASUREMENT
RESOLUTION — S101

STORE
MEASUREMENT
RESOLUTION — S102

ACCEPT IMAGE
PROCESSING
COMMAND — S103

S104 — WHAT
IMAGE TYPE?

SECTION
MEASUREMENT
DATA

SURFACE
MEASUREMENT
DATA

3D SURFACE

RECEIVE ENTRY OF
SECTION
MEASUREMENT
DATA — S109

RECEIVE ENTRY OF
SURFACE
MEASUREMENT
DATA — S107

RECEIVE ENTRY OF
3D SURFACE — S105

STORE SECTION
MEASUREMENT
DATA — S110

STORE SURFACE
MEASUREMENT
DATA — S108

STORE
3D SURFACE — S106

S111 — ENTRY
COMPLETED? — No

Yes

RETURN

34

FIG. 15

```
        ┌─────────────────┐
        │     VOXEL       │
        │   PROCESSING    │
        └────────┬────────┘
                 │
                 ▼
        ┌─────────────────┐  S201
        │     SELECT      │
        │ COMPARISON DATA │
        └────────┬────────┘
                 │
                 ▼
        ┌─────────────────┐  S202
        │ DETERMINE VOXEL │
        │      SIZE       │
        └────────┬────────┘
                 │
                 ▼
        ┌─────────────────┐  S203
        │  ACCEPT IMAGE   │
        │   PROCESSING    │
        │    REQUEST      │
        └────────┬────────┘
                 │
                 ▼
  S204      ◇─────────────◇
           ╱     WHAT      ╲
          ╱   IMAGE TYPE?   ╲
           ╲               ╱
            ◇─────────────◇
```

SECTION MEASUREMENT DATA    SURFACE MEASUREMENT DATA    3D SURFACE

| SELECT SECTION MEASUREMENT DATA (S209) | SELECT SURFACE MEASUREMENT DATA (S207) | SELECT 3D SURFACE DATA (S205) |
| CONVERT SECTION MEASUREMENT DATA INTO VOXELS (S210) | CONVERT SURFACE MEASUREMENT DATA INTO VOXELS (S208) | CONVERT 3D SURFACE DATA INTO VOXELS (S206) |

S211  ◇ ALL IMAGES CONVERTED? ◇ — No

Yes

RETURN

35

```
          ┌─────────────────┐
          │     IMAGE       │
          │  POSITIONING    │
          └─────────────────┘
                  │
                  ▼
          ┌─────────────────┐     S301
          │ SELECT FIDUCIAL │
          │     POINTS      │
          └─────────────────┘
                  │
                  ▼
          ┌─────────────────┐     S302
          │ CALCULATE OFFSETS│
          └─────────────────┘
                  │
                  ▼
          ┌─────────────────┐     S303
          │   MOVE IMAGES   │
          └─────────────────┘
                  │
                  ▼
          ┌─────────────────┐     S304
          │ STORE 3D IMAGES │
          └─────────────────┘
                  │
                  ▼
          ┌─────────────────┐
          │     RETURN      │
          └─────────────────┘
```

# FIG. 16

# FIG. 17

FIRST IMAGE COMPARISON

SELECT SURFACE VOXEL — S411

SURFACE VOCEL? — S412
No
Yes

SUBDIVIDE INTO VOXELS AT EVALUATION RESOLUTION — S413

COUNT VOXEL MISMATCHES — S414

APPLY VOXEL COLOR CODING — S415

COMPARISON COMPLETED? — S416
No
Yes

RETURN

FIG. 18

# FIG. 19

SECOND IMAGE
COMPARISON

SELECT SURFACE VOXEL — S421

SURFACE VOXEL? — S422

No

Yes

DETERMINE THE RANGE OF
VOXEL RECONVERSION — S423

SUBDIVIDE VOXELS AT
EVALUATION RESOLUTION — S424

COUNT MISMATCHED
VOXELS — S425

APPLY VOXEL COLOR
CODING — S426

COMPARISON
COMPLETED? — S427

No

Yes

RETURN

FIG. 20

MATCHED VOXELS

IMAGE B

IMAGE A

EP 1 519 318 A1

FIG. 21

FIG. 22

EP 1 519 318 A1

FIG. 23

COARSE VOXELS

DISSIMILAR PART

FINE VOXELS

IMAGE A

IMAGE B

MATCHED VOXELS

COARSE VOXELS

DEMARCA-TION LINE

FIG. 24

# FIG. 25

THIRD IMAGE
COMPARISON

SELECT SURFACE VOXELS — S431

SURFACE VOXEL? — S432

No

Yes

DETERMINE RANGE OF VOXEL
RECONVERSION — S433

SUBDIVIDE INTO VOXELS AT
EVALUATION RESOLUTION — S434

COUNT MISMATCHED VOXELS — S435

APPLY VOXEL COLOR CODING — S436

COMPARISON
COMPLETED? — S437

No

Yes

RETURN

MEASUREMENT
DATA (POINT)

DISTANCE BETWEEN
THE POINT AND
CURVED SURFACE

CAD DATA
(3D CURVED SURFACE)

FIG. 26

Im101

SURFACE DATA ⟷ HARD TO COMPARE ⟷ Im102 SURFACE DATA

TRANSLATE
SURFACE
INTO
POINTS

POSSIBLE TO COMPARE

PIm102

**FIG. 27**

## INTERNATIONAL SEARCH REPORT

| | International application No. |
|---|---|
| | PCT/JP02/06621 |

**A. CLASSIFICATION OF SUBJECT MATTER**
Int.Cl$^7$ G06T15/00

According to International Patent Classification (IPC) or to both national classification and IPC

**B. FIELDS SEARCHED**

Minimum documentation searched (classification system followed by classification symbols)
Int.Cl$^7$ G06T15/00, G06T1/00, G06T7/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 9-204532 A (Hitachi, Ltd.), 05 August, 1997 (05.08.97), | 1-17,25,26, 28,29,31,32 |
| A | Full text; Figs. 1 to 6 (Family: none) | 18-24,27,30, 33 |
| Y | JP 9-35058 A (NEC Corp.), 07 February, 1997 (07.02.97), Full text; Figs. 1, 2 (Family: none) | 1-17,25,26, 28,29,31,32 |
| Y | US 5301271 A (Matsushita Electric Industrial Co., | 4,5,13,14 |
| A | Ltd.), 05 April, 1994 (05.04.94), Column 7, lines 40 to 56; Fig. 4 & GB 2257595 A  & DE 4215157 A & JP 5-16435 A | 21,22 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 August, 2002 (09.08.02) | 27 August, 2002 (27.08.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP02/06621

| C (Continuation). DOCUMENTS CONSIDERED TO BE RELEVANT | | |
|---|---|---|
| Category* | Citation of document, with indication, where appropriate, of the relevant passages | Relevant to claim No. |
| Y<br>A | US 6175371 B1  (Philippe Schoulz, Paris),<br>16 January, 2001 (16.01.01),<br>Column 10, lines 4 to 14<br>& AU 6007396 A          & WO 96/38753 A1<br>& CA 2223007 A          & FR 2734918 A<br>& ZA 9604459 A          & FR 2738357 A<br>& EP 829029 A           & CN 1191613 A<br>& BR 9608953 A          & NZ 309818 A<br>& JP 11-509998 A        & AU 709976 B<br>& US 6175371 B1 | 4,5,13,14<br>21,22 |
| Y | US 5273040 A  (Picker International, Inc.),<br>28 December, 1993 (28.12.93),<br>Column 2, lines 33 to 46<br>& EP 0542414 B1         & DE 69223307 D<br>& DE 69223307 T         & DE 39231102 D<br>& DE 69231102 T         & JP 5-269115 A | 6,7 |
| Y | EP 1054384 A2 (Mitsubishi Electric Corp.),<br>22 November, 2000 (22.11.00),<br>Par. No. [0017]<br>& JP 2001-14486 A | 10,15,26,32 |

Form PCT/ISA/210 (continuation of second sheet) (July 1998)